# EUROPEAN PATENT SPECIFICATION

(11) **EP 4 246 347 B1**
(45) Date of publication and mention of the grant of the patent: **06.08.2025**
(21) Application number: 21909265.7
(22) Date of filing: 16.12.2021
(51) Int. Cl.: H04L 67/51, G06F 21/44, H04L 9/12, H04L 9/32, H04L 9/40

(54) **AGILE USER ACCOUNT LOGIN FROM ANY DEVICE ASSOCIATED TO SAID USER ACCOUNT**
AGILE BENUTZERKONTOANMELDUNG AUS EINER BELIEBIGEN VORRICHTUNG IM ZUSAMMENHANG MIT DEM BENUTZERKONTO
CONNEXION DE COMPTE UTILISATEUR AGILE À PARTIR DE N'IMPORTE QUEL DISPOSITIF ASSOCIÉ AUDIT COMPTE UTILISATEUR

(30) Priority: 22.12.2020 CN 202011527007
(43) Date of publication of application: 20.09.2023
(73) Proprietor: Huawei Technologies Co., Ltd., Shenzhen, Guangdong 518129 (CN)
(72) Inventor: LIU, Min, Shenzhen, Guangdong 518129 (CN); HU, Kai, Shenzhen, Guangdong 518129 (CN)
(74) Representative: Pfenning, Meinig & Partner mbB
(86) International application number: PCT/CN2021/138865
(87) International publication number: WO 2022/135269

(56) References cited:
- WO-A1-2020/020068
- CN-A- 103 634 316
- CN-A- 109 314 711
- CN-A- 109 598 115
- CN-A- 111 385 267
- CN-A- 111 756 696
- US-A1- 2015 106 887
- US-A1- 2020 067 901

## Description

### TECHNICAL FIELD

This application relates to the terminal field, and more specifically, to methods for performing authorization by using another device, corresponding electronic devices, a computer program product, a computer-readable storage medium, and a system.

### BACKGROUND

Currently, users have more devices, and there is usually a case that a same application is installed on different devices and a user needs to repeatedly log in to the same application on different devices. Cumbersome input and password memorizing make it inconvenient for the user to use the application.
US 2020/067901 A1 discloses methods and systems for facilitating an automated user login into a first application hosted by a first-screen device. A method includes detecting, by a second-screen device, a message transmitted by the first-screen device over a network; determining, based on the message, that the first application hosted by the first-screen device is requesting user authentication for the automated user login; presenting, via a second application hosted by the second-screen device, a prompt for user input indicating user acceptance of the automated user login; receiving the user input indicating the user acceptance of the automated user login; and responsive to the user input, transmitting an authentication code from the message to the server device to perform the user authentication for the automated user login into the first application.
WO 2020/010068 A1 discloses an authorized-login implementation method and device, an apparatus, a system, a platform and a storage medium. Said method comprises: a first authorization plug-in bound to a first application client receiving an authorized-login request from a second authorization plug-in bound to a second application client, the authorized-login request being used for the second application to request to login using a first application account; the first authorization plug-in requesting, by means of authorization information about the first application account, an authorization service platform to acquire an authorized-login code; and the first authorization plug-in feeding the authorized-login code back to the second authorization plug-in, so as to instruct the second authorization plug-in to request, according to the authorized-login code, the authorization service platform to acquire a second application account, the second application account being used for accessing the user resources of the first application account.

### SUMMARY

The invention is defined by the independent claims. Preferable embodiments are defined by the dependent claims. This application provides a method for performing authorization by using another device, an electronic device, and a system, to help reduce repeated operations and complex memorizing when a user performs login or registration on a plurality of devices, and help improve convenience of performing account login or account registration by the user.

### BRIEF DESCRIPTION OF DRAWINGS

FIG. 1 is a schematic diagram of a hardware structure of an electronic device according to an embodiment of this application;
FIG. 2 is a block diagram of a software structure according to an embodiment of this application;
FIG. 3(a)-1 to FIG. 3(d) show a group of graphical user interfaces according to an embodiment of this application;
FIG. 4(a) to FIG. 4(d) show another group of graphical user interfaces according to an embodiment of this application;
FIG. 5(a) to FIG. 5(d) show another group of graphical user interfaces according to an embodiment of this application;
FIG. 6(a)-1 to FIG. 6(d) show another group of graphical user interfaces according to an embodiment of this application;
FIG. 7 is a schematic diagram of a system architecture according to an embodiment of this application;
FIG. 8 is a schematic flowchart of a method for obtaining user data by device A according to an embodiment of this application;
FIG. 9 is a schematic flowchart of a method for performing authorization by using another device according to an embodiment of this application;
FIG. 10 is another schematic flowchart of a method for performing authorization by using another device according to an embodiment of this application;
FIG. 11 is another schematic flowchart of a method for performing authorization by using another device according to an embodiment of this application;
FIG. 12 is a schematic diagram of a structure of an apparatus according to an embodiment of this application;
FIG. 13 is another schematic diagram of a structure of an apparatus according to an embodiment of this application; and
FIG. 14 is a schematic diagram of another structure of an electronic device according to an embodiment of this application.

### DESCRIPTION OF EMBODIMENTS

The following describes technical solutions in embodiments of this application with reference to the accompanying drawings in embodiments of this application. In the descriptions of embodiments of this application, "/" means "or", unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the description in embodiments of this application, "a plurality of" means two or more than two.

The following terms "first" and "second" are merely used for description, but should not be understood as indicating or implying relative importance or implying a quantity of indicated technical features. Therefore, a feature limited by "first" or "second" may explicitly or implicitly include one or more features. In descriptions of the embodiments, unless otherwise stated, "a plurality of" means two or more.

A method provided in embodiments of this application may be applied to an electronic device like a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

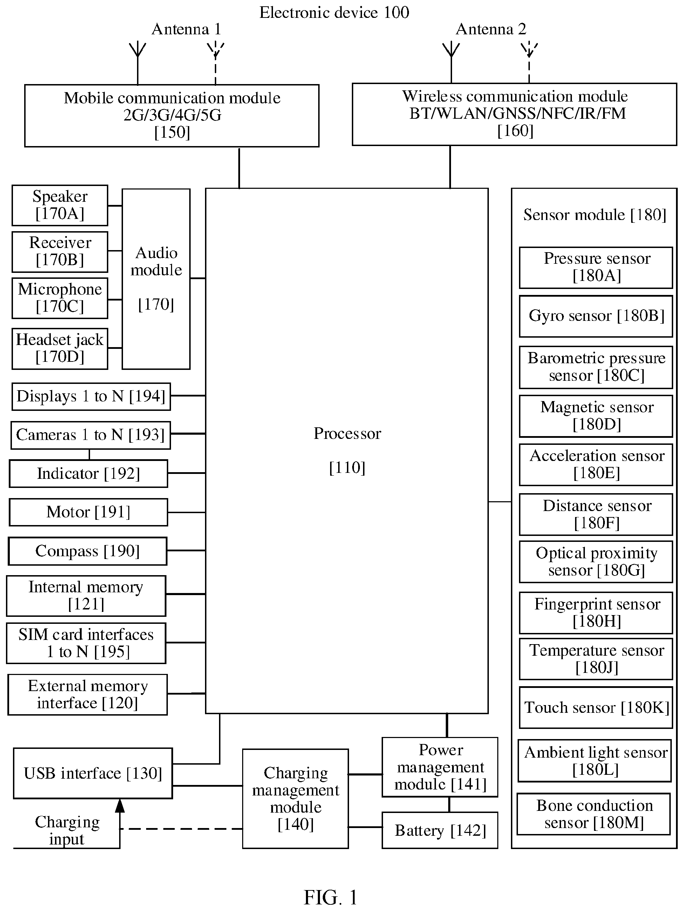

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K by using an I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may be configured to perform audio communication, and sample, quantize, and code analog signals. In some embodiments, the audio module 170 may be coupled to the wireless communication module 160 by using a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement a photographing function of the electronic device 100. The processor 110 communicates with the display 194 by using the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI interface, or the like.

The USB interface 130 is an interface conforming to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset to play audio by using the headset. The interface may alternatively be configured to connect to another electronic device, like an AR device.

It may be understood that the interface connection relationship between the modules shown in this embodiment of this application is merely an example, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from a charger. The charger may be a wireless charger, or may be a wired charger. In some wired charging embodiments, the charging management module 140 may receive charging input from a wired charger through the USB interface 130. In some wireless charging embodiments, the charging management module 140 may receive wireless charging input through a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communications module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be multiplexed to improve antenna utilization. For example, the antenna 1 may be multiplexed into a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some function modules of the mobile communication module 150 may be disposed in the processor 110. In some embodiments, at least some function modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another function module.

The wireless communication module 160 may provide a solution for wireless communication that is applied to the electronic device 100 and that includes a wireless local area network (wireless local area network, WLAN) (like a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated by using a lens and projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format like RGB or YUV. In some embodiments, the electronic device 100 may include one or N cameras 193, where N is a positive integer greater than 1.

The digital signal processor is configured to process a digital signal. In addition to processing a digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the electronic device 100, for example, image recognition, facial recognition, voice recognition, and text understanding.

The external memory interface 120 may be configured to connect to an external memory card, like a micro SD card, to extend a storage capability of the electronic device 100. The external memory card communicates with the processor 110 through the external memory interface 120, to implement a data storage function. For example, files such as music or videos are stored in the external memory card.

The internal memory 121 may be configured to store computer executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the electronic device 100. In addition, the internal memory 121 may include a high-speed random access memory, and may further include a non-volatile memory, like at least one magnetic disk storage component, flash memory component, and universal flash storage (universal flash storage, UFS).

The electronic device 100 may implement an audio function, like music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some function modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or audio information is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth, to enter a sound signal to the microphone 170C. At least one microphone 170C may be disposed on the electronic device 100. In some other embodiments, two microphones 170C may be disposed on the electronic device 100. In addition to sound signal collection, a noise reduction function may be further implemented. In some other embodiments, three, four, or more microphones 170C may be alternatively disposed on the electronic device 100, to collect a sound signal, implement noise reduction, recognize a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines strength of the pressure based on the change of the capacitance. When a touch operation is performed on the display 194, the electronic device 100 detects strength of the touch operation through the pressure sensor 180A. The electronic device 100 may also calculate a position of the touch based on a detection signal of the pressure sensor 180A. In some embodiments, touch operations performed on a same touch position but has different touch operation strength may correspond to different operation instructions. For example, when a touch operation whose touch operation strength is less than a first pressure threshold is applied to a Messages icon, an instruction for viewing an SMS message is executed. When a touch operation whose touch operation strength is greater than or equal to the first pressure threshold is applied to the Messages icon, an instruction for creating an SMS message is executed.

The gyro sensor 180B may be configured to determine a motion gesture of the electronic device 100. In some embodiments, angular velocities of the electronic device 100 around the three axes (that is, the x-axis, the y-axis, and the z-axis) may be determined by using the gyro sensor 180B. The gyro sensor 180B may be used for image stabilization during photographing. For example, when a shutter is pressed, the gyro sensor 180B detects a jittering angle of the electronic device 100, calculates, based on the angle, a distance for which a lens module needs to compensate, and enables the lens to offset jittering of the electronic device 100 through reverse motion, so as to implement image stabilization. The gyro sensor 180B may be further used in a navigation scenario and a motion-controlled gaming scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature like automatic unlocking upon opening of the flip cover is set based on a detected opening or closing state of the flip cover.

The acceleration sensor 180E may detect values of acceleration of the electronic device 100 in all directions (usually on three axes). When the electronic device 100 is static, the acceleration sensor 180E may detect magnitude and a direction of gravity. The acceleration sensor may be further configured to recognize a posture of the electronic device, and is applied to applications such as switching between landscape mode and vertical mode and a pedometer.

The distance sensor 180F is configured to measure a distance. The electronic device 100 may measure a distance through infrared or laser. In some embodiments, in a photographing scenario, the electronic device 100 may measure a distance by using the distance sensor 180F, to implement quick focusing.

The optical proximity sensor 180G may include, for example, a light-emitting diode (LED) and a light detector like a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to the ear for a call, to automatically turn off a screen to save power. The optical proximity sensor 180G may also be used in a flip cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may further cooperate with the optical proximity sensor 180G to detect whether the electronic device 100 is in a pocket, to prevent an accidental touch.

The fingerprint sensor 180H is configured to collect a fingerprint. The electronic device 100 may implement fingerprint-based unlocking, application lock access, fingerprint-based photographing, fingerprint-based call answering, or the like based on a feature of the collected fingerprint.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 reduces performance of a processor near the temperature sensor 180J, to reduce power consumption and implement thermal protection. In some other embodiments, when the temperature is lower than another threshold, the electronic device 100 heats the battery 142 to avoid abnormal shutdown of the electronic device 100 that is caused due to a low temperature. In some other embodiments, when the temperature is lower than still another threshold, the electronic device 100 boosts an output voltage of the battery 142, to avoid an abnormal shutdown caused by a low temperature.

The touch sensor 180K is also referred to as a "touch panel". The touch sensor 180K may be disposed on the display 194. The touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. Visual output related to the touch operation may be provided by using the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal cord part. The bone conduction sensor 180M may also be in contact with a human pulse, and receive a blood pressure beating signal. In some embodiments, the bone conduction sensor 180M may alternatively be disposed in the headset, to form a bone conduction headset. The audio module 170 may obtain a voice signal through parsing based on the vibration signal, of the vibration bone of the vocal cord part, obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive button input, and generate button signal input related to user settings and function control of the electronic device 100.

The motor 191 may generate a vibration prompt. The motor 191 may be used for an incoming call vibration prompt, or may be used for touch vibration feedback. For example, touch operations performed on different applications (for example, photo taking and audio playing) may be corresponding to different vibration feedback effects. The motor 191 may also correspond to different vibration feedback effects for touch operations performed in different regions of the display 194. Different application scenarios (for example, a time reminder, information receiving, an alarm clock, and a game) may also be corresponding to different vibration feedback effects. A touch vibration feedback effect may be further customized.

The indicator 192 may be an indicator light, and may be used to indicate a charging status or a power change, or may be used to indicate a message, a missed call, a notification, or the like.

The SIM card interface 195 is configured to connect to a SIM card. The SIM card may be inserted into the SIM card interface 195 or pulled out of the SIM card interface 195, to implement contact with or separation from the electronic device 100. The electronic device 100 may support one or N SIM card interfaces, and N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external memory card. The electronic device 100 interacts with a network by using a SIM card, to implement functions such as conversation and data communication. In some embodiments, the electronic device 100 uses an embedded-SIM (embedded-SIM, eSIM) card, that is, an embedded SIM card. The eSIM card may be embedded in the electronic device 100, and cannot be separated from the electronic device 100.

It should be understood that a phone card in embodiments of this application includes but is not limited to a SIM card, an eSIM card, a universal subscriber identity module (universal subscriber identity module, USIM) card, a universal integrated circuit card (universal integrated circuit card, UICC), or the like.

A software system of the electronic device 100 may use a layered architecture, an event-driven architecture, a microkernel architecture, a micro-service architecture, or a cloud architecture. In embodiments of this application, an Android system with a layered architecture is used as an example to describe the software structure of the electronic device 100.

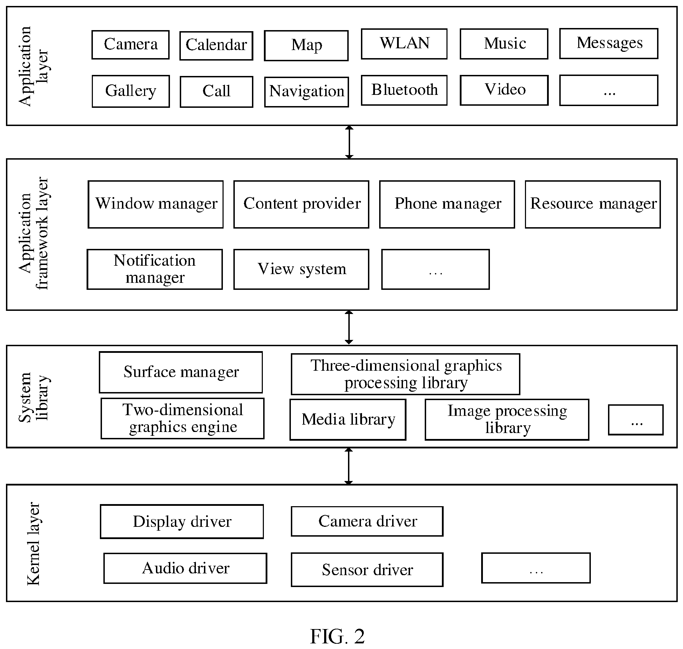

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Call, Map, Navigation, WLAN, Bluetooth, Music, Video, and Messages.

The application framework layer provides an application programming interface (application programming interface, API) and a programming framework for applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage window programs. The window manager may obtain a display size, determine whether there is a status bar, lock a screen, take a screenshot, and the like.

The content provider is configured to store and obtain data and make the data accessible to the application. The data may include videos, images, audio, calls that are made and received, browsing history and bookmarks, a phone book, and the like.

The view system includes visual controls, such as a text display control and a picture display control. The view system may be configured to construct an application. A display interface may include one or more views. For example, a display interface including an SMS notification icon may include a text display view and a picture display view.

The phone manager is configured to provide a communication function of the electronic device 100, for example, call status management (including accepting and declining).

The resource manager provides various resources for the application, such as a localized string, an icon, a picture, a layout file, and a video file.

The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, a prompt tone is made, the electronic device vibrates, and an indicator flickers.

The Android runtime includes a kernel library and a virtual machine. The Android runtime is responsible for scheduling and management of the Android system.

The kernel library includes two parts: a function that needs to be invoked by using the Java language, and a kernel library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of function modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and Harmony.

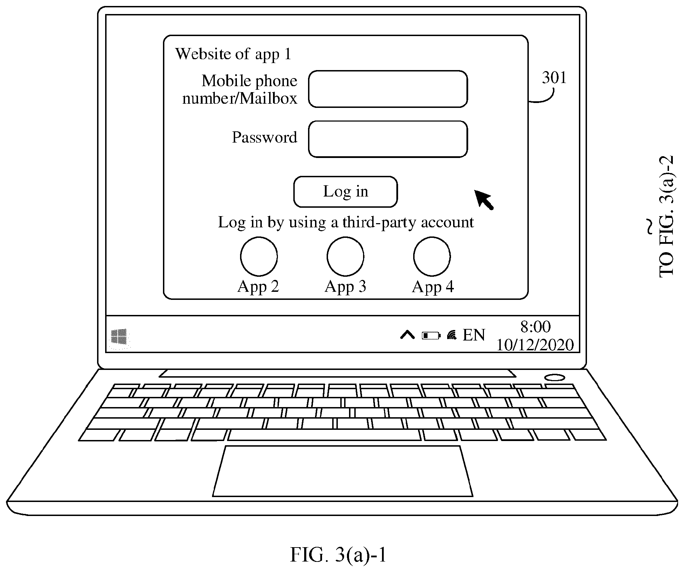

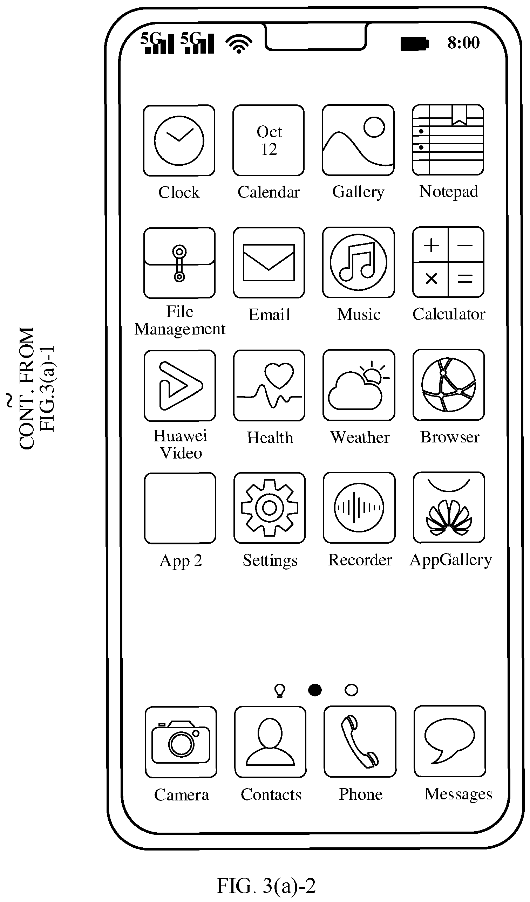

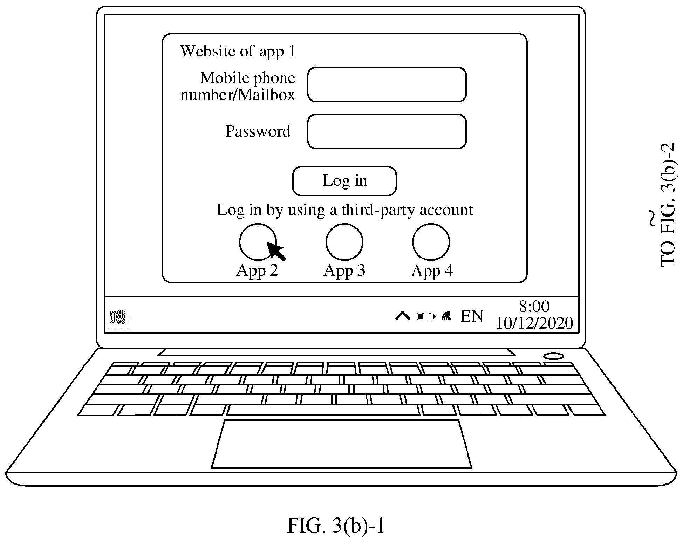

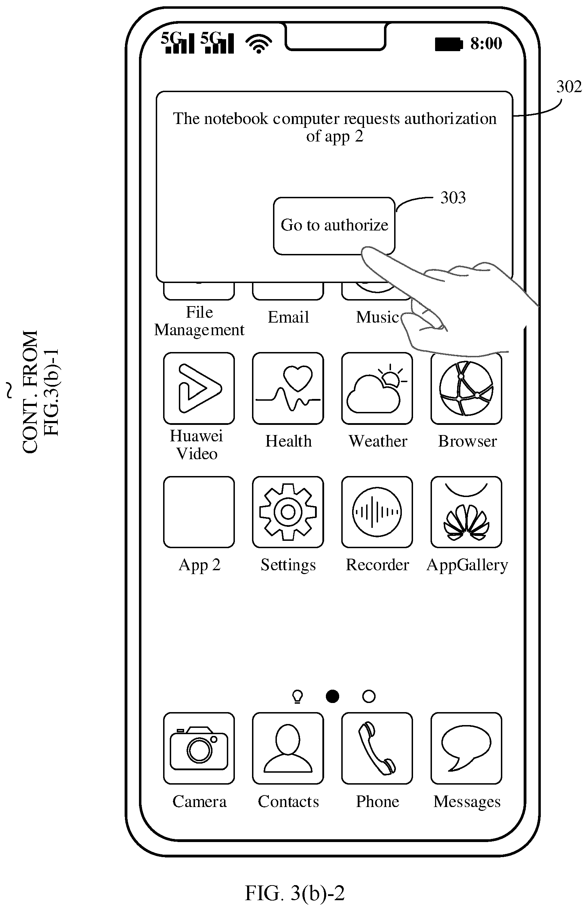

FIG. 3(a)-1 to FIG. 3(d) show a group of graphical user interfaces (graphical user interface, GUI) according to an embodiment of this application.

As shown in FIG. 3(a)-1 and FIG. 3(a)-2, a notebook computer displays a display interface of a website of app 1, and the display interface is a web page login interface of app 1. A mobile phone displays a home screen of the mobile phone, and the home screen of the mobile phone includes an icon of app 2.

As shown in FIG. 3(b)-1 and FIG. 3(b)-2, the notebook computer detects an operation that a user performs login by using a third-party account (an account of app 2). In response to detecting the operation that the user performs login by using the account of app 2, the notebook computer may send a query request to a surrounding device. The query request is used to query a surrounding device on which app 2 is installed. If the mobile phone receives the query request and app 2 is installed on the mobile phone, the mobile phone may send a response (ACK) to the notebook computer. In response to receiving the response sent by the mobile phone, the notebook computer may send an authorization request (authorization request) to the mobile phone. The authorization request is used to request app 2 on the mobile phone to perform login authorization for app 1. In response to receiving the authorization request, the mobile phone may display a prompt box 302. The prompt box 302 includes prompt information "The notebook computer requests authorization of app 2".

In an embodiment, in response to detecting the operation that the user performs login by using the account of app 2, the notebook computer may send the query request to a device under a same account (for example, the device under the same account includes the mobile phone) or the mobile phone in a same family group (for example, the family group includes account 1 and account 2, a device under account 1 includes the notebook computer, and a device under account 2 includes the mobile phone).

It should be understood that in this embodiment of this application, the user may invite an account (for example, Huawei ID 2) of another family member by using a login account (for example, Huawei ID 1) on a device, so that the account of the user and the account of the another family member form a family group. After the family group is formed, information can be shared between the account of the user and the account of the another family member. For example, the account of the user may obtain information such as a device name, a device type, and an address from the account of the another family member. For another example, if the user purchases a member of an application, the another family member may obtain membership of the user. For another example, members in a same family group may share storage space of a cloud server.

In an embodiment, after receiving the authorization request, the mobile phone may determine whether the notebook computer is a trusted device. For example, if the mobile phone determines that the mobile phone and the notebook computer are devices under a same account, the mobile phone may determine that the notebook computer is a trusted device; or if the mobile phone determines that the mobile phone and the notebook computer are devices in a same family group, the mobile phone may determine that the notebook computer is a trusted device; or if the mobile phone determines that the user sets the notebook computer as a trusted device on the mobile phone, the mobile phone may determine that the notebook computer is a trusted device. After the mobile phone determines that the notebook computer is a trusted device, the mobile phone may display the prompt box 302. If the mobile phone determines that the notebook computer is an untrusted device, the mobile phone may prompt, in the displayed prompt box 302, the user that the notebook computer is an untrusted device.

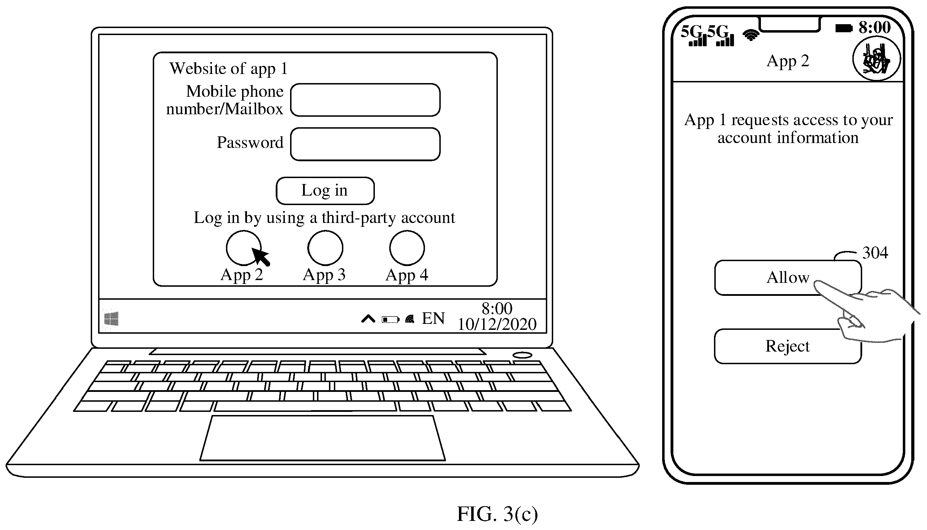

As shown in FIG. 3(c), when the mobile phone detects an operation of tapping a control 303 by the user, the mobile phone may start app 2, and display login authorization information of app 1 in a display interface of app 2. As shown in FIG. 3(c), the display interface of app 2 includes prompt information "App 1 requests access to your account information". The mobile phone detects an operation of tapping a control 304 by the user, and may request, from a server of app 2, information (for example, an access token (access token)) used for login authorization. In response to receiving the information used for login authorization from the server of app 2, the mobile phone may send the information used for login authorization to the notebook computer.

In an embodiment, the mobile phone may also prompt, in the display interface of app 2, the user to select content of the account information that app 1 is authorized to use. For example, the user may choose to allow app 1 to use nickname and profile picture information of an account of app 2, and choose to not allow app 1 to use region and gender information of the account of app 2.

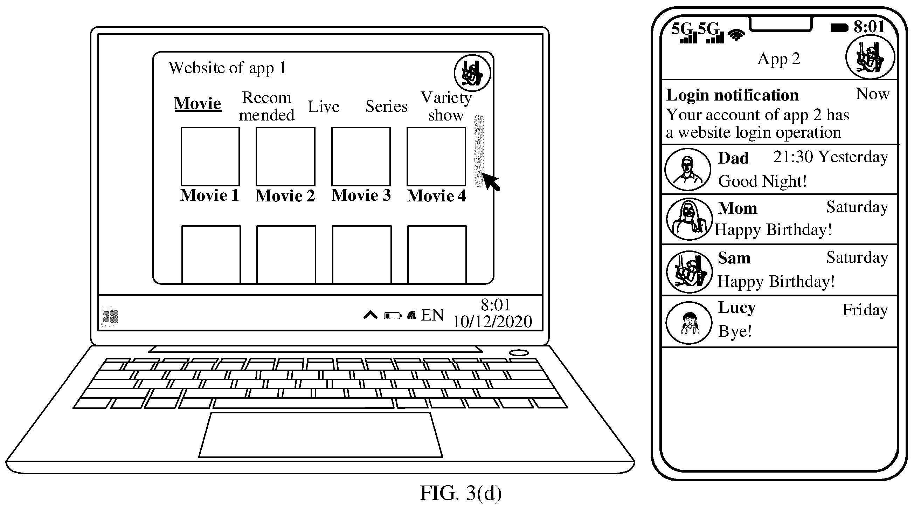

As shown in FIG. 3(d), in response to receiving the information used for login authorization from the mobile phone, the notebook computer may request the account information of app 2 from the server of app 2 by using the information used for login authorization. In response to obtaining the corresponding account information from the server of app 2, the notebook computer may use the account information to implement login for the website of app 1. After login is implemented, the notebook computer may display a display interface of app 1. Login account information of app 1 may be displayed in an upper right corner of the display interface, and a profile picture of the login account of app 1 is the same as a profile picture of the account of app 2. The mobile phone may display a chat record display interface of app 2, and a latest chat record is a login operation notification "Your account of app 2 has a website login operation".

In this embodiment of this application, the notebook computer may conveniently and quickly log in to an application by using the mobile phone on which the third-party application app 2 is installed. This simplifies an interaction step of application login authorization, avoids a cumbersome input process or an active memorizing process of the user, improves application login efficiency of the user, and ensures security of application login.

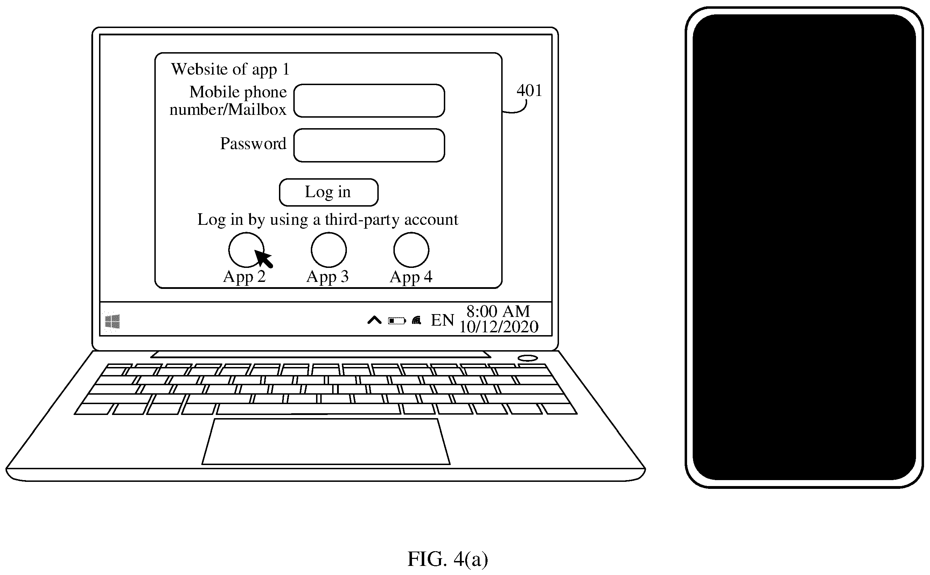

FIG. 4(a) to FIG. 4(d) show another group of GUIs according to an embodiment of this application.

As shown in FIG. 4(a), a mobile phone displays a lock screen interface. A notebook computer displays a display interface of a website of app 1, and the display interface is a web page login interface of app 1. The notebook computer detects an operation that a user performs login by using a third-party account (an account of app 2). In response to detecting the operation that the user performs login by using the account of app 2, the notebook computer may send a query request to a surrounding device. The query request is used to query a surrounding device on which app 2 is installed. If the mobile phone and a tablet computer receive the query request and app 2 is installed on both the mobile phone and the tablet computer, the mobile phone and the tablet computer each may send a response (ACK) to the notebook computer.

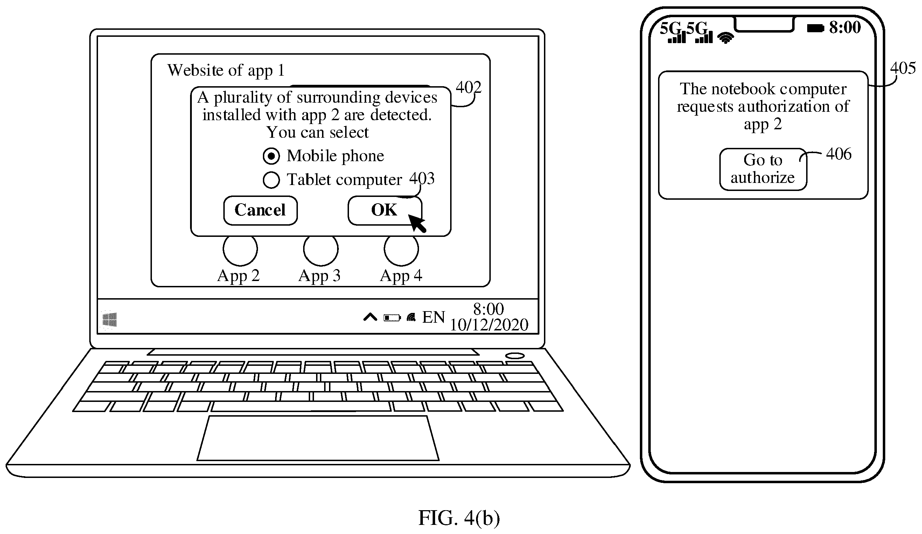

As shown in FIG. 4(b), in response to receiving responses from the mobile phone and the tablet computer, the notebook computer may display a prompt box 402, where the prompt box 402 includes prompt information "A plurality of surrounding devices installed with app 2 are detected. You can select". In response to detecting an operation that the user selects the mobile phone and taps a control 403, the notebook computer sends an authorization request to the mobile phone, where the authorization request is used to request app 2 on the mobile phone to perform login authorization for app 1. In response to receiving the authorization request, the mobile phone may display a prompt box 405. The prompt box 405 includes prompt information "The notebook computer requests authorization of app 2".

In an embodiment, in response to detecting the operation that the user performs login by using the account of app 2, the notebook computer may send the query request to a device under a same account (for example, the device under the same account includes the mobile phone and the tablet computer). If app 2 is installed on both the mobile phone and the tablet computer, the mobile phone and the tablet computer each may send a response (ACK) to the notebook computer.

Alternatively, the notebook computer may send the query request to another device in a same family group (for example, the family group includes account 1 and account 2, devices under account 1 include the notebook computer and the mobile phone, and a device under account 2 includes the tablet computer). If app 2 is installed on both the mobile phone and the tablet computer, the mobile phone and the tablet computer each may send a response (ACK) to the notebook computer.

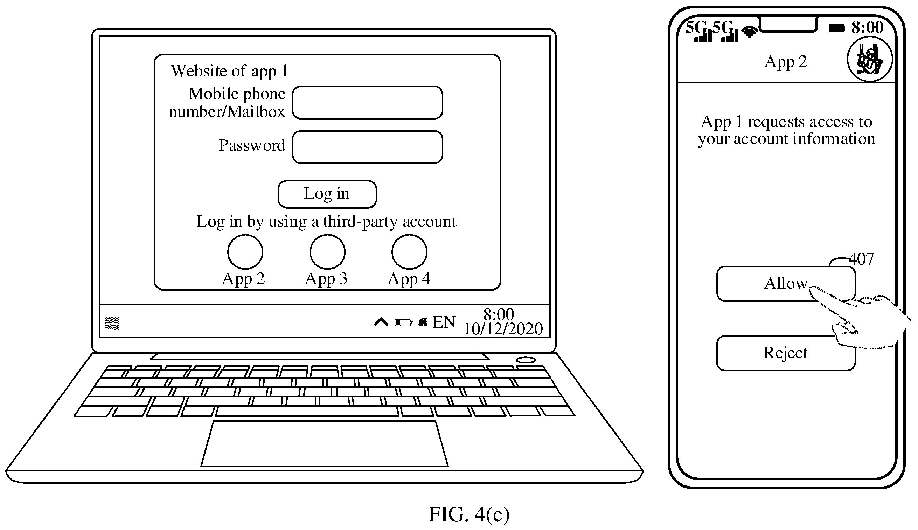

As shown in FIG. 4(c), when the mobile phone detects an operation of tapping a control 407 by the user, the mobile phone may start app 2, and display login authorization information of app 1 in a display interface of app 2. As shown in FIG. 4(c), the display interface of app 2 includes prompt information "App 1 requests access to your account information". The mobile phone detects the operation of tapping the control 407 by the user, and the mobile phone may request, from a server of app 2, information (for example, an access token) used for login authorization. In response to receiving the information used for login authorization from the server of app 2, the mobile phone may send the information used for login authorization to the notebook computer.

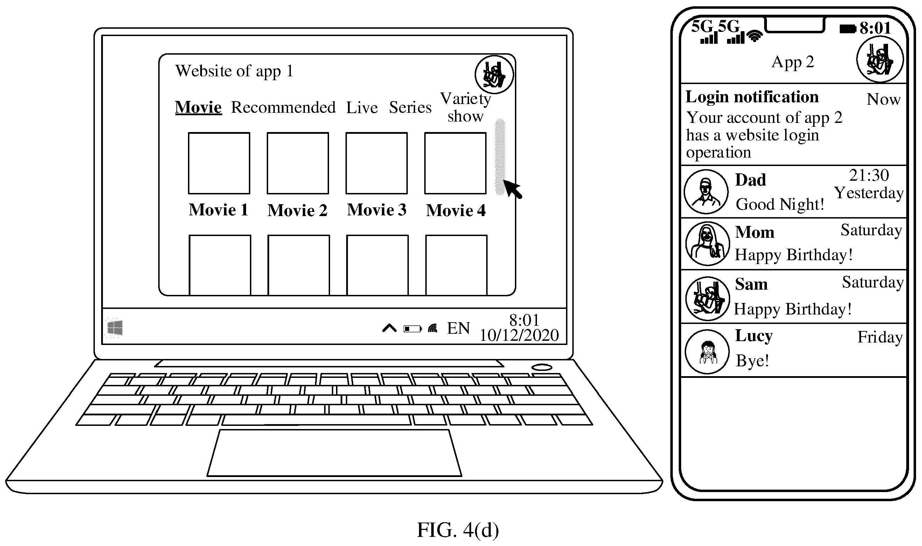

As shown in FIG. 4(d), in response to receiving the information used for login authorization from the mobile phone, the notebook computer may request the account information of app 2 from the server of app 2 by using the information used for login authorization. In response to obtaining the corresponding user information from the server of app 2, the notebook computer may use the account information to implement login for the website of app 1. After login is implemented, the notebook computer may display a display interface of app 1. Login account information of app 1 may be displayed in an upper right corner of the display interface, and a profile picture of the login account of app 1 is the same as a profile picture of the account of app 2. The mobile phone may display a chat record display interface of app 2, and a latest chat record is a login operation notification "Your account of app 2 has a website login operation".

In this embodiment of this application, the notebook computer may conveniently and quickly log in to an application by using a surrounding device on which the third-party application app 2 is installed. When there are a plurality of available devices around, the notebook computer may prompt the user to select an appropriate device for login. This simplifies an interaction step of application login authorization, avoids a cumbersome input process or an active memorizing process of the user, improves application login efficiency of the user, and ensures security of application login.

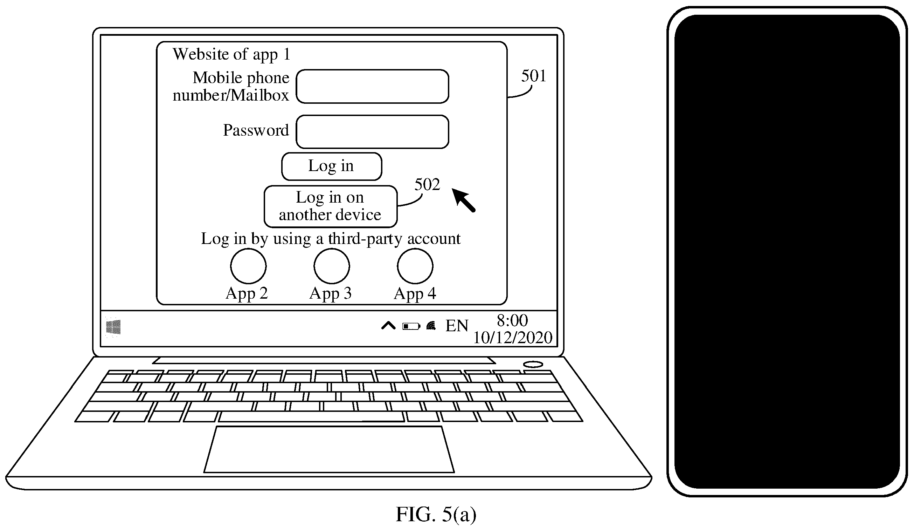

FIG. 5(a) to FIG. 5(d) show another group of GUIs according to an embodiment of this application.

As shown in FIG. 5(a), a mobile phone displays a lock screen interface. A notebook computer displays a display interface of a website of app 1, and the display interface is a web page login interface 501 of app 1. The notebook computer detects an operation that a user taps a control 502 for performing login by using another device.

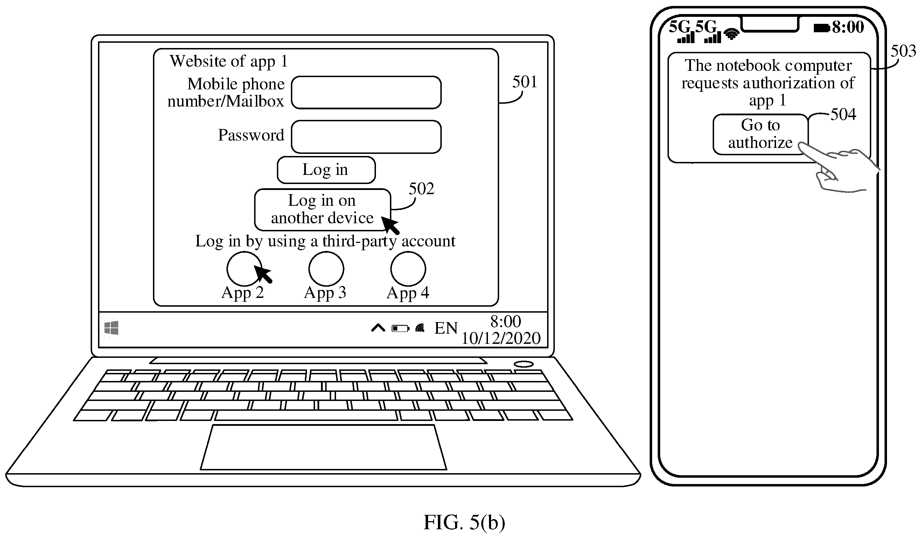

As shown in FIG. 5(b), in response to detecting the operation that the user taps the control 502, the notebook computer may send a query request to a surrounding device. The query request is used to query a surrounding device on which app 1 is installed. If the mobile phone receives the query request and app 1 is installed on the mobile phone, the mobile phone may send a response (ACK) to the notebook computer.

As shown in FIG. 5(b), in response to receiving the response sent by the mobile phone, the notebook computer may send an authorization request to the mobile phone. The authorization request is used to request app 1 on the mobile phone to perform login authorization for app 1 on the notebook computer. In response to receiving the authorization request, the mobile phone may display a prompt box 503. The prompt box 503 includes prompt information "The notebook computer requests authorization of app 1".

In an embodiment, in response to receiving the response sent by the mobile phone, the notebook computer may further prompt the user with "Detect that app 1 is installed on the mobile phone, do you want to use the mobile phone for authorization". When the notebook computer detects an operation that the user determines to use the mobile phone for authorization, the notebook computer may send the authorization request to the mobile phone.

In an embodiment, the notebook computer receives responses from the mobile phone and a tablet computer, and the notebook computer may prompt the user with "Detect that app 1 is installed on the mobile phone and the tablet computer, please determine a device for authorization". When the notebook computer detects an operation that the user determines to use the mobile phone for authorization, the notebook computer may send the authorization request to the mobile phone.

In an embodiment, after receiving the authorization request, the mobile phone may determine whether the notebook computer is a trusted device. For example, if the mobile phone determines that the mobile phone and the notebook computer are devices under a same account, the mobile phone may determine that the notebook computer is a trusted device; or if the mobile phone determines that the mobile phone and the notebook computer are devices in a same family group, the mobile phone may determine that the notebook computer is a trusted device; or if the mobile phone determines that the user sets the notebook computer as a trusted device on the mobile phone, the mobile phone may determine that the notebook computer is a trusted device. After the mobile phone determines that the notebook computer is a trusted device, the mobile phone may display the prompt box 503. If the mobile phone determines that the notebook computer is an untrusted device, the mobile phone may prompt, in the displayed prompt box 503, the user that the notebook computer is an untrusted device.

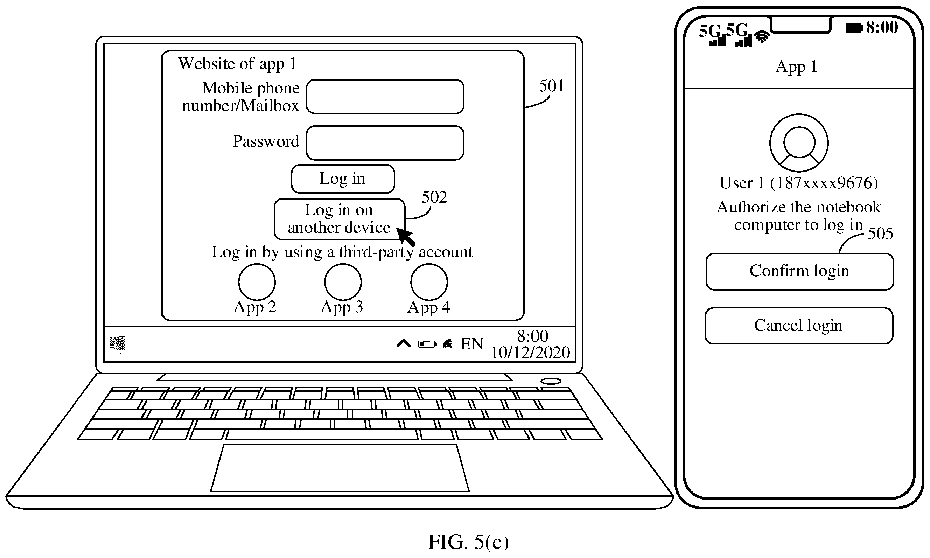

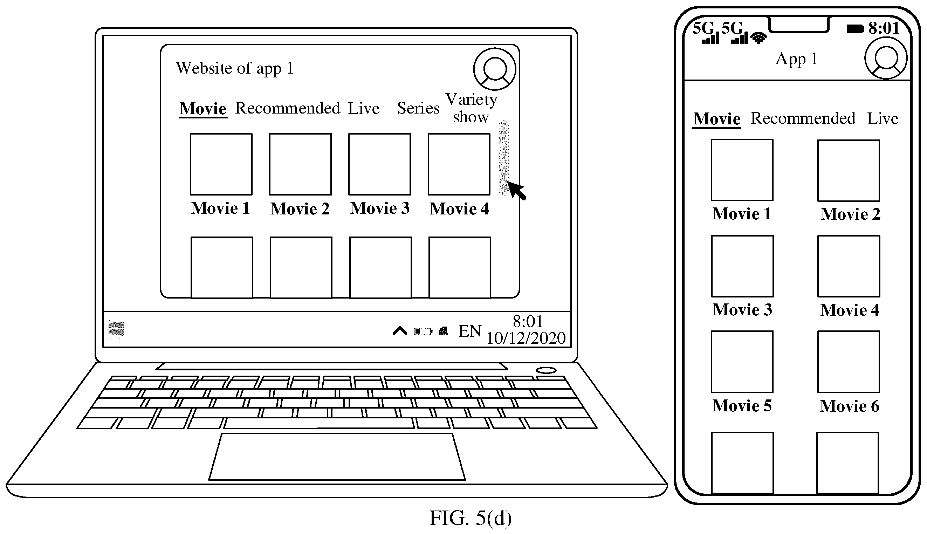

As shown in FIG. 5(c), in response to a fact that the mobile phone detects an operation that the user taps a control 504, the mobile phone may start app 1 and display a login authorization interface of app 1. The login authorization interface includes information for prompting the user to perform login confirmation. The mobile phone detects an operation of tapping a control 505 by the user, and may request, from a server of app 1, information (for example, an access token) used for login authorization. In response to receiving the information used for login authorization from the server of app 1, the mobile phone may send the information used for login authorization to the notebook computer. As shown in FIG. 5(d), in response to receiving the information used for login authorization from the mobile phone, the notebook computer may request login account information of app 1 on the mobile phone from the server of app 1 by using the information used for login authorization. In response to obtaining the account information from the server of app 1, the notebook computer may use the account information to implement login for the website of app 1. After login is implemented, the notebook computer may display a display interface of app 1. Profile picture information of a login account of app 1 on the mobile phone may be displayed in an upper right corner of the display interface. In this way, a same account is logged in to on the mobile phone and the notebook computer.

In this embodiment of this application, the notebook computer may conveniently and quickly log in to an application by using the mobile phone on which the third-party application app 1 is installed. This simplifies an interaction step of application login authorization, avoids a cumbersome input process or an active memorizing process of the user, improves application login efficiency of the user, and ensures security of application login.

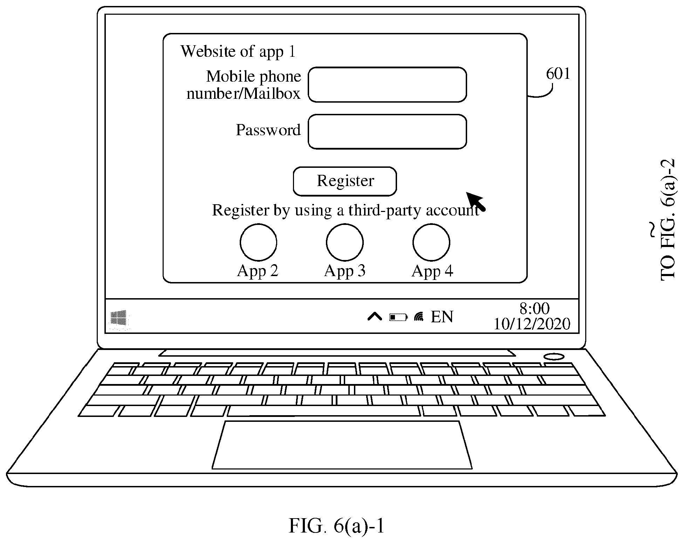

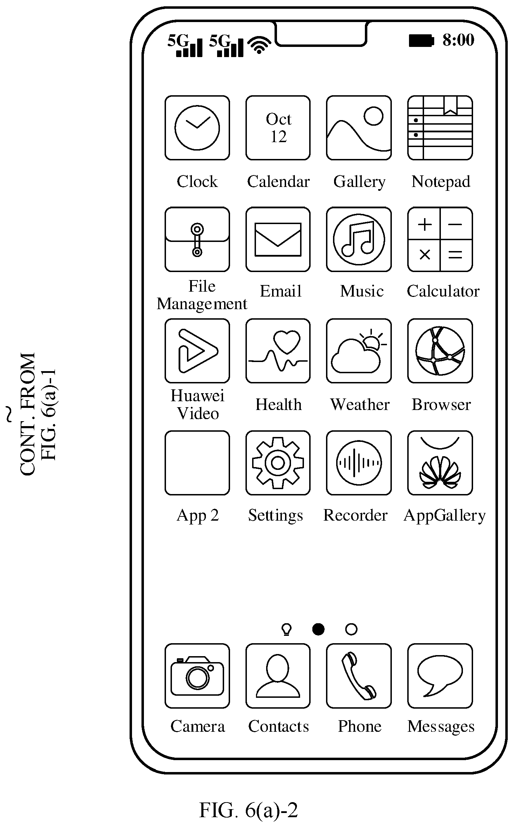

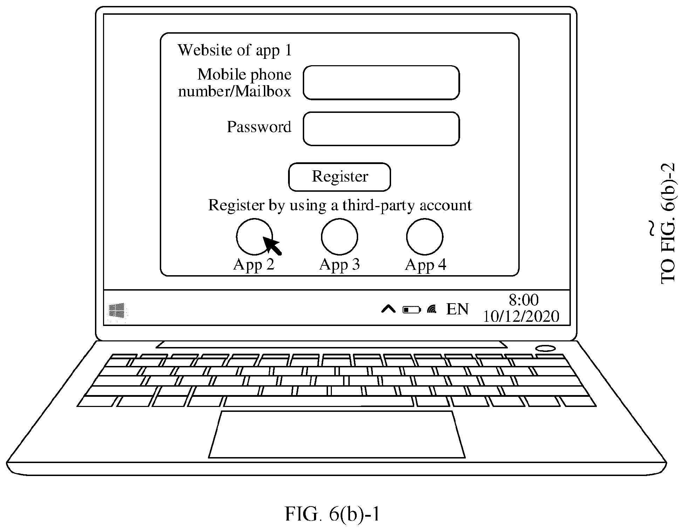

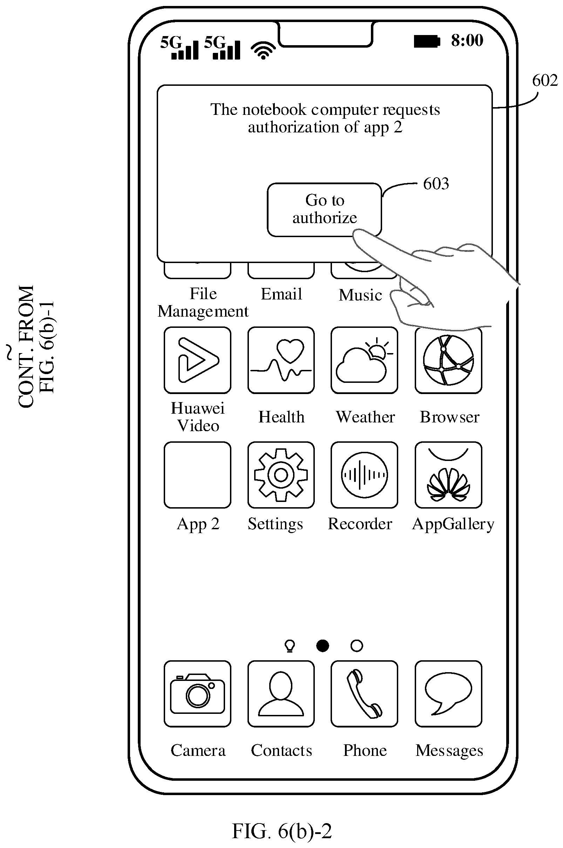

FIG. 6(a)-1 to FIG. 6(d) show another group of GUIs according to an embodiment of this application.

As shown in FIG. 6(a)-1 and FIG. 6(a)-2, a notebook computer displays a display interface of a website of app 1, and the display interface is a web page registration interface 601 of app 1. A mobile phone displays a home screen of the mobile phone, and the home screen of the mobile phone includes an icon of app 2.

As shown in FIG. 6(b)-1 and FIG. 6(b)-2, the notebook computer detects an operation that a user performs registration and login by using a third-party account (an account of app 2). In response to detecting the operation that the user performs registration by using the account of app 2, the notebook computer may send a query request to a surrounding device. The query request is used to query a surrounding device on which app 2 is installed. If the mobile phone receives the query request and app 2 is installed on the mobile phone, the mobile phone may send a response (ACK) to the notebook computer. In response to receiving the response sent by the mobile phone, the notebook computer may send an authorization request to the mobile phone. The authorization request is used to request app 2 on the mobile phone to perform login authorization for app 1. In response to receiving the authorization request, the mobile phone may display a prompt box 602. The prompt box 302 includes prompt information "The notebook computer requests authorization of app 2".

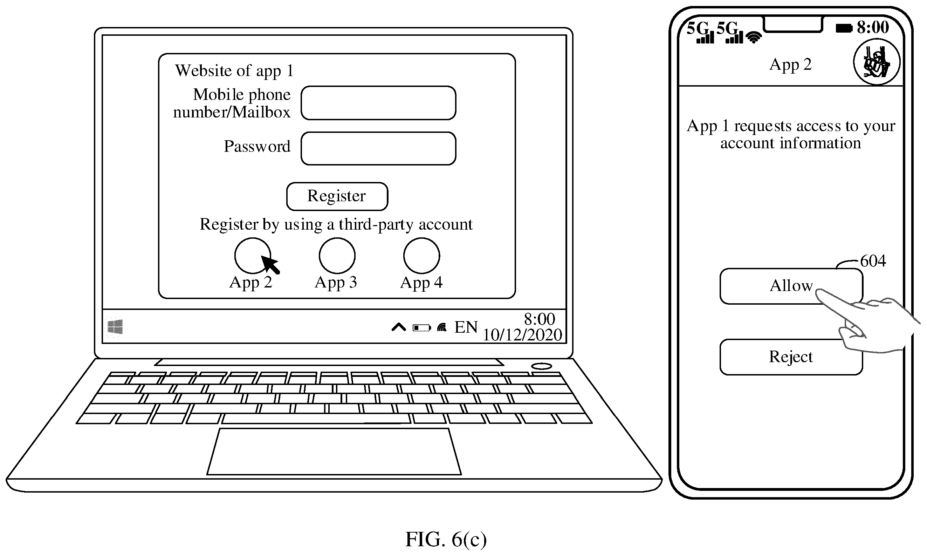

As shown in FIG. 6(c), when the mobile phone detects an operation of tapping a control 603 by the user, the mobile phone may start app 2, and display login authorization information of app 1 in a display interface of app 2. As shown in FIG. 6(c), the display interface of app 2 includes prompt information "App 1 requests access to your account information". The mobile phone detects an operation of tapping a control 604 by the user, and may request, from a server of app 2, information (for example, an access token (access token)) used for login authorization. In response to receiving the information used for login authorization from the server of app 2, the mobile phone may send the information used for login authorization to the notebook computer.

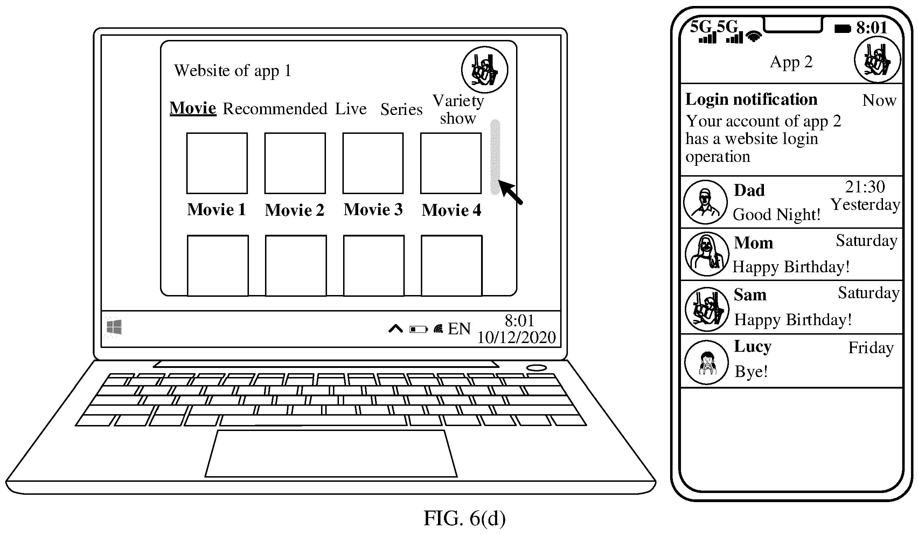

As shown in FIG. 6(d), in response to receiving the information used for login authorization from the mobile phone, the notebook computer may request the account information of app 2 from the server of app 2 by using the information used for login authorization. In response to obtaining the account information from the server of app 2, the notebook computer may use the account information to implement login for the website of app 1. After login is implemented, the notebook computer may display a display interface of app 1. Login account information of app 1 may be displayed in an upper right corner of the display interface, and a profile picture of the login account of app 1 is the same as a profile picture of the account of app 2. The mobile phone may display a chat record display interface of app 2, and a latest chat record is a login operation notification "Your account of app 2 has a website login operation".

In this embodiment of this application, the notebook computer may conveniently and quickly perform account registration for app 1 by using the mobile phone on which the third-party application app 2 is installed. This simplifies an interaction step during application registration, avoids a cumbersome input process of the user, and improves efficiency of the user during account registration.

The foregoing describes several groups of GUIs in embodiments of this application with reference to FIG. 3(a)-1 to FIG. 3(d) to FIG. 6(a)-1 to FIG. 6(d), and the following describes an internal implementation process of embodiments of this application with reference to the accompanying drawings.

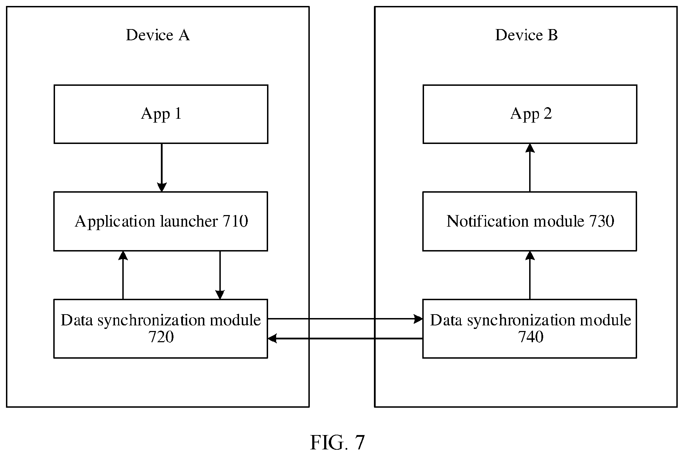

FIG. 7 is a schematic diagram of a system architecture according to an embodiment of this application. The system architecture includes device A (for example, a notebook computer) and device B (for example, a mobile phone). Device A includes app 1 for which login or registration is to be performed, an application launcher 710, and a data synchronization module 720. The application launcher 710 is configured to process an application startup request, and provide application information (for example, app 2, app 3, and app 4 shown in FIG. 3(a)-1 and FIG. 3(a)-2) that can respond to a specific service. The data synchronization module 720 is configured to process request forwarding and data synchronization between device A and another device. Device B includes app 2, a notification module 730, and a data synchronization module 740. App 2 is an application that supports login authorization (for example, OAuth login authorization) for another application. The notification module 730 is configured to notify or prompt a user with specific information or a specific operation.

When detecting that a user logs in to app 1 or registers an account of app 1 on device A, device A selects app 2 that can perform third-party login authorization to perform login or registration. The application launcher 710 of device A queries whether app 2 is installed on device A. In addition, the application launcher 710 may send a query request to the data synchronization module 720. The query request is used to query whether app 2 is installed on a surrounding device. The data synchronization module 720 may send a first message, and the first message may include the query request.

For example, the first message may be a broadcast message, the broadcast message may be a Bluetooth low energy (Bluetooth low energy, BLE) data packet, and the BLE data packet may carry the query request. The BLE data packet includes a protocol data unit (protocol data unit, PDU), and the query request may be carried in a service data (service data) field in the PDU, or may be carried in a manufacturer specific data (manufacturer specific data) field in the PDU. For example, a payload (payload) of the service data field may include a plurality of bits. The plurality of bits include an extensible bit. Device A and a surrounding device (including device B) may agree on content of an extensible bit. When an extensible bit is 1, device B may learn that device A queries whether app 2 is installed on device B.

The broadcast message may further carry a media access control (media access control, MAC) address of device A. For example, if the broadcast message is the BLE data packet, the MAC address of device A may be carried in an access address (access address) field in the BLE data packet.

For example, the first message may be a broadcast message, the broadcast message may be a user datagram protocol (user datagram protocol, UDP) data packet, and the UDP data packet may carry the query request. The UDP data packet includes a data part of an IP datagram. The data part of the IP datagram may include an extensible bit. Device A and a surrounding device (including device B) may agree on content of an extensible bit. When an extensible bit is 1, device B may learn that device A queries whether app 2 is installed on device B.

The UDP data packet may carry an IP address and a port number (including a source port number and a destination port number, where the source port number is a port number used by device A to send data, and the destination port number indicates a port used by device A to receive data) of device A. The IP address and the port number of device A may be carried in a UDP header of the data part of the IP datagram.

In an embodiment, the data synchronization module 720 may send the query request to a device (including device B) under a same account, or the data synchronization module 720 may send the query request to a device (including device B) in a same family group. An example is as follows. The data synchronization module 720 may use a BLE data packet or a UDP data packet to carry the query request, and send the BLE data packet or the UDP data packet to the data synchronization module 740 of device B. For a specific process of sending the query request by using the BLE data packet or the UDP data packet, refer to the description in the foregoing embodiment. For brevity, details are not described herein again.

For example, if device A and device B are devices under a same account, device A may store information such as a device type, a device name, and a MAC address of device B. When device A detects that a user performs login authorization or registration authorization for app 1 by using app 2, device A may send a BLE data packet to device B based on the MAC address of device B. The BLE data packet may include a PDU. The query request may be carried in a service data field in the PDU, or may be carried in a manufacturer specific data field in the PDU. For example, a payload of the service data field may include a plurality of bits. The plurality of bits include an extensible bit. Device A and device B may agree on content of an extensible bit. When an extensible bit is 1, device B may learn that device A queries whether app 2 is installed on device B.

In an embodiment, if device A and device B are devices under a same account, device A may further store information about an application installed on device B. For example, device B may send a BLE data packet to device A, and the BLE data packet may carry package name information of all applications installed on device B. Package name information of all the applications installed on device B may be carried in a service data field in a PDU, or may be carried in a manufacturer specific data field in a PDU. For example, a payload of the service data field may include a plurality of bits. The plurality of bits include an extensible bit. Device B may encode the package name information of all the applications in an encoding manner like GBK, ISO8859-1, or Unicode (for example, UTF-8 or UTF-16), and use one or more extendable bits to carry information obtained through encoding. After receiving the BLE data packet sent by device B, device A may decode information in a corresponding bit, to obtain the information about the application installed on device B.

In an embodiment, after receiving the first message sent by the data synchronization module 720 of device A, the data synchronization module 740 of device B may first establish a connection to device A. For example, if the BLE data packet sent by device A to device B carries the MAC address of device A, after obtaining the MAC address of device A, device B may establish a Bluetooth connection to device A. For example, if the UDP data packet carries the IP address and the destination port number of device A, device B may establish a transmission control protocol (transmission control protocol, TCP) connection to device A by using the IP address and the destination port number.

The data synchronization module 740 of device B sends a response to the query request to the data synchronization module 720 of device A.

For example, the response may be carried in a BLE data packet, the BLE data packet includes a protocol data unit, and the response may be carried in a service data field in the PDU, or may be carried in a manufacturer specific data field in the PDU. For example, a payload of the service data field may include a plurality of bits. The plurality of bits include an extensible bit. Device A and device B may agree on content of an extensible bit. When an extensible bit is 1, device A may learn that app 2 is installed on device B.

For example, device B may send the response to device A by using the TCP connection to device A.

After receiving the response sent by the data synchronization module 740 of device B, the data synchronization module 720 of device A may forward the response to the application launcher 710. The application launcher 710 may determine installation information of app 2 on device A and installation information of app 2 on a surrounding device (or a device under a same account or a device in a same family group).

In an embodiment, if app 2 is not installed on device A, and device A receives only the response sent by device B, device A may not prompt the user with the installation information of app 2 on device A and the installation information of app 2 on the surrounding device (or the device under the same account or the device in the same family group), but directly send an authorization request to device B.

In an embodiment, if app 2 is not installed on device A, and device A receives responses sent by at least two devices (for example, device B and device C), device A may prompt the user that app 2 is installed on device B and device C, and prompt the user to select one of the devices for login authorization. For example, as shown in FIG. 4(b), the notebook computer may prompt the user that app 2 is installed on both the mobile phone and the tablet computer.

In an embodiment, if app 2 is installed on device A, and device A receives a response sent by at least one device, device A may prompt the user that app 2 is installed on device A and device B, and prompt the user to select one of the devices for login authorization.

In an embodiment, if app 2 is installed on device A, and device A does not receive a response sent by another device, device A may start app 2 for login authorization.

When device A detects an operation that the user selects app 2 on device B to perform login authorization, the application launcher 710 of device A may send an authorization request (authorization request) to the data synchronization module 720, where the authorization request is used to request app 2 on device B to perform login authorization for app 1.

It should be understood that, for a process in which device A sends the authorization request to device B, refer to the foregoing process in which device A sends the query request to device B. For brevity, details are not described herein again.

After receiving the authorization request, the data synchronization module 740 of device B may send the authorization request to the notification module 730. The notification module 730 may prompt, based on the authorization request, the user to perform authorization in app 2. For example, as shown in FIG. 3(b)-1 and FIG. 3(b)- 2, after receiving the authorization request sent by the notebook computer, the mobile phone may display the prompt box 302. The prompt box 302 includes prompt information "The notebook computer requests authorization of app 2". When detecting an authorization operation of the user, device B may start app 2 and prompt the user that app 1 requests access to account information of app 2. When detecting an operation that the user allows app 1 to use the account information of app 2, device B may request, from a server of app 2, information (for example, an access token) used for login authorization. The server of app 2 may send the information used for login authorization to device B.

In an embodiment, when detecting the operation that the user allows app 1 to use the account information of app 2, device B may send a hypertext transfer protocol (hypertext transfer protocol, HTTP) request to the server of app 2 based on a uniform resource locator (uniform resource locator, URL) address of app 2. The HTTP request may carry request information, and the request information is used to request the information used for login authorization. In response to receiving the HTTP request, the server of app 2 sends an HTTP response to device B. The HTTP response may carry the information used for login authorization.

It should be understood that when the user installs app 2 on device B, device B may obtain the URL address of app 2 from the server of app 2. When detecting the operation that the user allows app 1 to use the account information of app 2, device B may send the HTTP request to the server of app 2.

Device B may send the information used for login authorization to device A, so that device A requests the account information of app 2 from the server of app 2 by using the information used for login authorization, thereby implementing login or registration for app 1 on device A.

In an embodiment, the information used for login authorization may be an access token, and the access token may include a character string.

For example, device B may send a BLE data packet to device A, and the BLE data packet may include the access token. The access token may be carried in a service data field or a manufacturer specific data field in the PDU. For example, a payload of the service data field may include a plurality of bits. The plurality of bits include an extensible bit. Device B may encode the access token in an encoding manner like GBK, ISO8859-1, or Unicode (for example, UTF-8 or UTF-16), and use one or more extendable bits to carry information obtained through encoding. After receiving the BLE data packet sent by device B, device A may decode information in a corresponding bit, to obtain the access token.

For example, device B may alternatively send the access token to device A by using a TCP connection.

It should be understood that, in this embodiment of this application, signaling between device B and the server of app 2 may be transmitted by using a network transmission channel, and signaling between device A and the server of app 2 may also be transmitted by using a network transmission channel.

It should be further understood that when the user installs app 1 on device A (or opens a login or registration interface of app 1 by using a web page), device A may obtain a URL address of the server of app 2 from a server of app 1. Therefore, when receiving the access token, device A may send an HTTP request to the server of app 2 based on the URL address of the server of app 2. The HTTP request may carry the access token. In response to receiving the HTTP request from device A, the server of app 2 may determine that the access token is sent by the server of app 2 to device B. In this case, the server of app 2 may send an HTTP response to device A, and the HTTP response includes login account information of app 2 on device B.

It should be further understood that, if app 1 supports login authorization or registration authorization performed by using a third-party (for example, app 2) account, a developer of app 1 may write the URL address of the server of app 2 into an installation package of app 1 and upload the URL address to the server of app 1. In this case, when the user installs app 1 on device A, device A may obtain the installation package of app 1 from the server of app 1, to obtain the URL address of the server of app 2.

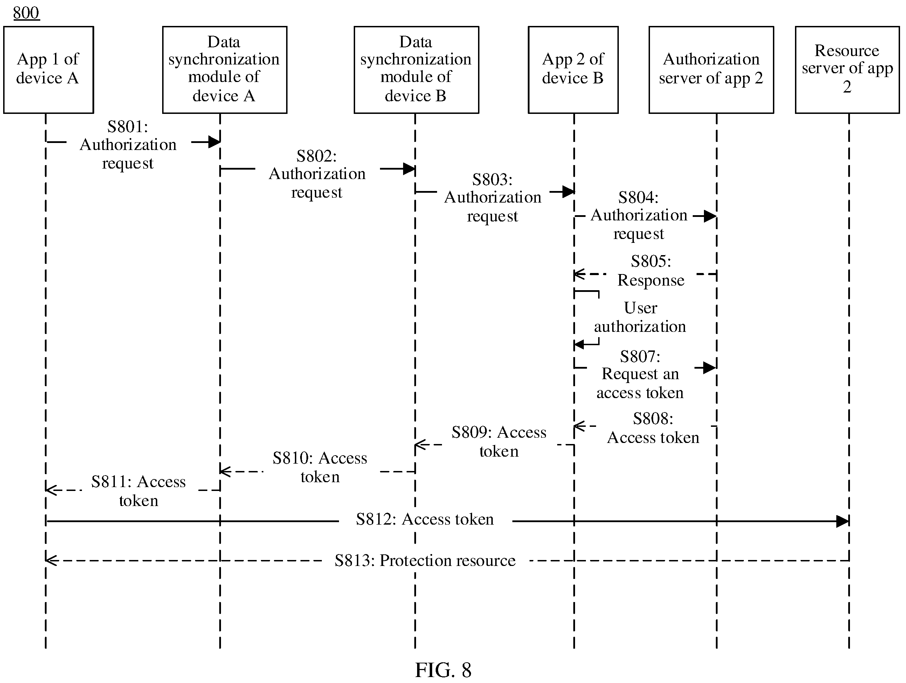

With reference to FIG. 8, the following describes a schematic flowchart of a method 800 for obtaining user data by device A. As shown in FIG. 8, the method 800 includes the following steps.

S801: App 1 of device A sends an authorization request (authorization request) to the data synchronization module 720 of device A.

For example, device A may use a BLE data packet to carry the authorization request; or device A may use a UDP data packet to carry the authorization request.

S802: The data synchronization module 720 of device A forwards the authorization request to the data synchronization module 740 of device B.

It should be understood that, for a process in which the data synchronization module 720 of device A forwards the authorization request to the data synchronization module 740 of device B, refer to the foregoing process in which the data synchronization module 720 of device A sends the query request to the data synchronization module 740 of device B. For brevity, details are not described herein again.

In an embodiment, the authorization request includes identification information of app 1.

For example, the identification information of app 1 may be a unique ID (for example, client_id) of app 1.

In this embodiment of this application, if app 1 supports login authorization performed by using a third-party application (for example, app 2), when a user installs app 1 on device A, device A may obtain the identification information of app 1 from a server of app 1.

It should be understood that, if app 1 supports login authorization performed by using a third-party application (for example, app 2), a developer of app 1 obtains the identification information of app 1 from a developer of app 2, writes the identification information of app 1 into an installation package of app 1, and uploads the identification information to the server of app 1. When the user installs app 1 on device A, device A may obtain the identification information of app 1 from the server of app 1. The developer of app 2 may upload the identification information of app 1 to a server of app 2. When the server of app 2 obtains the authorization request, the identification information in the authorization request may be verified by using the identification information uploaded by the developer of app 2.

In an embodiment, the identification information of app 1 may be obtained by device A from the server of app 1 when app 1 is installed, or may be obtained in real time. For example, in response to detecting, in a login or registration interface of app 1, an operation that the user taps to perform account login or account registration for app 1 by using app 2, device A may request the identification information of app 1 from the server of app 1. The identification information of app 1 is carried in the authorization request, so that the server of app 2 can verify the identification information. In this way, device B can send information (for example, an access token) used for login authorization to device A.

S803: The data synchronization module 740 of device B sends the authorization request to app 2 of device B.

S804: App 2 of device B sends the authorization request to an authorization server of app 2.

It should be understood that, after receiving the authorization request sent by the data synchronization module 740, app 2 of device B may send the HTTP request to the authorization server of app 2 based on a URL address of the authorization server of app 2. The HTTP request may carry the authorization request.

It should be further understood that when the user installs app 2 on device B, device B may obtain the URL address of the authorization server of app 2 from the authorization server of app 2. When device B receives the authorization request from device A, device B may determine that device A expects to perform login authorization for app 1 by using app 2, so that device B may send the HTTP request to the authorization server of app 2 based on the URL address of the authorization server of app 2. The HTTP request may carry the authorization request.

S805: In response to receiving the authorization request sent by device B, the authorization server of app 2 sends a response to the authorization request to app 2 of device B.

In an embodiment, the response may be an authorization code (authorization code).

In an embodiment, the authorization server of app 2 may verify the identification information of app 1 in the authorization request. If the verification succeeds, the authorization server of app 2 may send the response to device B.

It should be understood that, after receiving the HTTP request sent by device B, the authorization server of app 2 may send an HTTP response to device B. The HTTP response includes the response to the authorization request.

S806: In response to receiving the response from the authorization server of app 2, device B prompts the user to determine whether to allow login authorization for app 1.

S807: In response to detecting, by device B, an operation that the user allows login authorization for app 1, app 2 of device B sends request information to the authorization server of app 2, where the request information is used to request an access token.

S808: In response to receiving the request information from device B, the authorization server of app 2 sends the access token to app 2 of device B.

It should be understood that, in S804 to S808, information between device B and the authorization server of app 2 may be transmitted by using a network channel between device B and the authorization server of app 2.

It should be understood that, for a process in which device B sends the request information to the authorization server of app 2 and a process in which the authorization server of app 2 sends the access token to device B, refer to the description in the foregoing embodiment. For brevity, details are not described herein again.

S809: App 2 of device B sends the access token to the data synchronization module of device B.

S810: The data synchronization module of device B sends the access token to the data synchronization module of device A.

It should be understood that for a process in which device B sends the access token to device A, refer to the description in the foregoing embodiment. For brevity, details are not described herein again.

S811: The data synchronization module of device A sends the access token to app 1 of device A.

S812: App 1 of device A sends the access token to a resource server of app 2.

After device A receives the access token sent by device B, device A sends an HTTP request to a URL address of the resource server of app 2 based on a fact of detecting, in a login (or registration) interface of app 1, an operation that the user taps app 2. The HTTP request may carry the access token.

It should be understood that when the user installs app 1 on device A, device A may obtain the URL address of the resource server of app 2 from the resource server of app 2.

It should be further understood that the authorization server of app 2 and the resource server of app 2 may be two independent servers, or the authorization server of app 2 and the resource server of app 2 may be located in a same server. This is not limited in this embodiment of this application.

In an embodiment, app 1 of device A may further send the identification information of app 1 to the resource server of app 2.

S813: In response to receiving the access token, the resource server of app 2 sends a protection resource (protect resource) to app 1 of device A, where the protection resource includes account information of app 2.

After receiving the HTTP request sent by device A, the resource server of app 2 may obtain the access token from the HTTP request. Because the access token is sent by the authorization server of app 2 to device B, the resource server of app 2 may determine that device A expects to request login account information of app 2 on device B. Therefore, the resource server of app 2 may send an HTTP response to device A. The HTTP response may carry the protection resource.

After obtaining the protection resource, app 1 of device A may implement login based on user data in the protection resource. For example, app 1 obtains the account information of app 2 from the obtained protection resource, and app 1 may generate an account of app 1 by using the account information of app 2, or query an account of app 1 that has been associated with the account of app 2, to implement login.

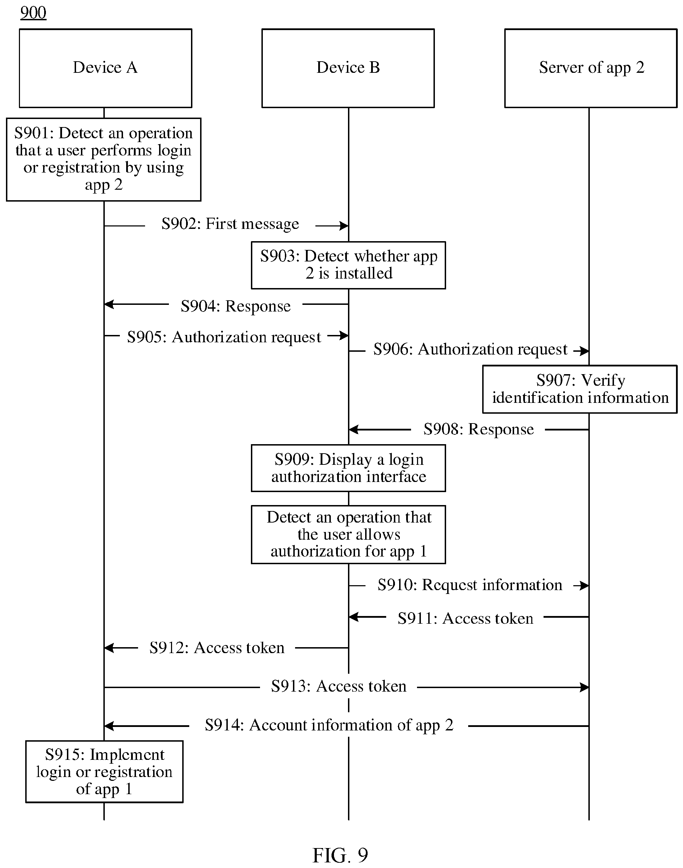

FIG. 9 is a schematic flowchart of a method 900 for performing authorization by using another device according to an embodiment of this application. The method 900 includes the following steps.

S901: Device A detects, in a login interface or a registration interface of app 1, an operation that a user performs login or registration by using a third-party application app 2.

For example, as shown in FIG. 3(a)-1 and FIG. 3(a)-2, the mobile phone detects an operation that the user performs login by using a third-party account (app 2).

S902: In response to the operation, device A sends a first message, where the first message is used to query whether app 2 is installed on a device that receives the first message.

In an embodiment, the first message is used to query whether app 2 is installed and logged in to on a device that receives the first message.

It should be understood that, for a process in which device A sends the first message, refer to the description in the foregoing embodiment. For brevity, details are not described herein again.

S903: When receiving the first message, device B may detect whether app 2 is installed on device B.

For example, device A may send a BLE data packet to device B, and the BLE data packet may include package name information of app 2. The BLE data packet includes a protocol data unit, and the package name information of app 2 may be carried in a service data field in the PDU, or may be carried in a manufacturer specific data field in the PDU. For example, a payload of the service data field may include a plurality of bits. The plurality of bits include an extensible bit. Device A may encode the package name information of app 2 in an encoding manner like GBK, ISO8859-1, or Unicode (for example, UTF-8 or UTF-16), and use one or more extendable bits to carry information obtained through encoding. After receiving the BLE data packet sent by device A, device B may decode information in a corresponding bit to obtain the package name information of app 2, so as to learn that device A expects to query whether app 2 is installed on device B.

Device B may query package name information of all applications installed at an application layer. If package name information of an application in device B is the same as the package name information carried in the BLE data packet, device B may determine that app 2 is installed.

In an embodiment, the first message is used to query whether app 2 is installed and logged in to on a device that receives the first message.

For example, device A may send a BLE data packet to device B, the BLE data packet may include package name information of app 2 and indication information, and the indication information indicates device B to determine whether an application corresponding to the package name information is logged in to. The BLE data packet includes a protocol data unit, and the package name information of app 2 and the indication information may be carried in a service data field in the PDU, or may be carried in a manufacturer specific data field in the PDU. For example, a payload of the service data field may include a plurality of bits. The plurality of bits include an extensible bit. Device A may encode the package name information of app 2 in an encoding manner like GBK, ISO8859-1, or Unicode (for example, UTF-8 or UTF-16), and use one or more extendable bits to carry information obtained through encoding. Device A may further set an extensible bit to 1 ("1" is used to indicate device B to query whether an application corresponding to the package name information is installed and logged in to). After receiving the BLE data packet sent by device A, device B may decode information in a corresponding bit to obtain the package name information of app 2, and determine, by using the bit 1, that device A expects to query whether the application corresponding to the package name information is installed and logged in to on device B.

Device B may query package name information of all applications installed at an application layer. If package name information of an application in device B is the same as the package name information carried in the BLE data packet, device B may determine that app 2 is installed. After it is determined that app 2 is installed, the data synchronization module of device B may invoke a login query interface (for example, a content provider interface) to send a request to app 2 at the application layer, where the request is used to request app 2 to determine whether an account is logged in to. If the account is logged in to app 2, app 2 may send a response to the data synchronization module, where the response indicates that the account is logged in to app 2. In this way, device B may determine that app 2 is installed and logged in to on device B.

S904: When determining that app 2 is installed, device B may send a response to device A, where the response indicates that app 2 is installed on device B.

In an embodiment, if the first message is used to query whether app 2 is installed and logged in to on a device that receives the first message, when determining that app 2 is installed and logged in to, device B may send a response to device A. The response indicates that app 2 is installed and logged in to on device B.

It should be understood that, for a process in which device B sends the response to device A, refer to the description in the foregoing embodiment. For brevity, details are not described herein again.

In an embodiment, the method 900 further includes: Device A requests identification information of app 1 on device A from a server of app 1.

In an embodiment, the identification information of app 1 is a unique identifier of app 1.

It should be understood that, for a process in which device A obtains the identification information of app 1, refer to the description in the foregoing embodiment. For brevity, details are not described herein again.

S905: Device A sends an authorization request (authorization request) to device B, where the authorization request is used to request app 2 on device B to perform login authorization for app 1, and the authorization request includes the identification information. S906: In response to receiving the authorization request, device B sends the authorization request to a server of app 2.

In an embodiment, device B sends the authorization request to an authorization server of app 2.

In this embodiment of this application, the authorization request sent by device B to the server of app 2 may be transmitted through a network transmission channel between device B and the server of app 2.

In an embodiment, when device B receives the authorization request, if app 2 is installed on device B but app 2 does not have a login account, device B may first prompt the user to log in to an account of app 2. After device B detects that the user logs in to app 2, device B may send the authorization request to the server of app 2.

S907: The server of app 2 verifies the identification information of app 1 in response to receiving the authorization request.

Because the server of app 1 has previously requested the identification information of app 1 from the server of app 2, app 2 may store the identification information of app 1 sent to the server of app 1. After obtaining the authorization request sent by device A, the server of app 2 may verify, based on the identification information that is of app 1 and that is stored by the server of app 2, the identification information of app 1 that is sent by device B.

S908: In response to a fact that verification on the identification information of app 1 succeeds, the server of app 2 sends a response.

In an embodiment, the response may indicate device B to prompt the user to determine whether to allow login authorization for app 1.

In an embodiment, the response may be an authorization code.

S909: In response to receiving the response from the server of app 2, device B may display a login authorization interface.

For example, as shown in FIG. 3(c), in response to receiving the authorization code from the server of app 2, the mobile phone may display login authorization information of app 1 in a display interface of app 2. As shown in FIG. 3(c), the display interface of app 2 includes prompt information "App 1 requests access to your account information".

In an embodiment, the login authorization interface may further include a plurality of options of account information of app 2, for example, profile picture information, gender, and nickname of the account of app 2. The user may select some or all of the plurality of options.

S910: In response to an operation that the user allows login authorization for app 1, device B sends request information to the server of app 2, where the request information is used to request an access token (access token).

In an embodiment, device B sends the request information to the authorization server of app 2.

S911: In response to obtaining the request information from device B, the server of app 2 sends the access token (access token) to device B.

It should be understood that signaling in both S912 and S913 may be transmitted through the network transmission channel between device B and the server of app 2.

For example, in response to the operation that the user allows login authorization for app 1, device B may send an HTTP request to the server of app 2 based on a URL address of the server of app 2, where the HTTP request may carry the request information. In response to receiving the HTTP request sent by device B, the server of app 2 may send an HTTP response to device B, where the HTTP response includes the access token.

S912: In response to receiving the access token from the server of app 2, device B sends the access token to device A.

It should be understood that for a process in which device B sends the access token to device A, refer to the description in the foregoing embodiment. For brevity, details are not described herein again.

S913: In response to receiving the access token from device B, device A sends the access token to the server of app 2.

In an embodiment, device A sends the access token to a resource server of app 2.

In an embodiment, device A may send the access token and the identification information of app 1 to a resource server of app 2. After receiving the access token and the identification information of app 1, the resource server of app 2 may first verify the identification information of app 1. If the resource server of app 2 verifies the identification information of app 1 successfully, the resource server of app 2 may send the account information of app 2 to device A.

For example, after device A receives the access token sent by device B, device A sends an HTTP request to a URL address of the resource server of app 2 based on a fact of detecting, in a login (or registration) interface of app 1, an operation that the user taps app 2. The HTTP request may carry the access token.

S914: In response to receiving the access token from device A, the server of app 2 may send the account information of app 2 to device A.

For example, in response to receiving the HTTP request sent by device A, the resource server of app 2 may obtain the access token in the HTTP request. Because the access token is an access token sent by the authorization server of app 2 to device B, the resource server of app 2 may learn that device A expects to use the access token to request login account information of app 2 on device B. Therefore, the resource server of app 2 sends an HTTP response to device A, and the HTTP response may carry the login account information of app 2 on device B.

In an embodiment, if the user selects a part of account information (for example, the user selects the profile picture information and the nickname of the account of app 2) in S911, the server of app 2 may determine the part of account information authorized by the user. After the server of app 2 receives the access token sent by device A, the server of app 2 may send the part of account information to device A.

S915: In response to receiving the account information of app 2 from the server of app 2, device A implements login or registration for app 1.

After obtaining the account information, app 1 of device A may implement login based on user data in the account information. For example, app 1 may generate an account of app 1 by using the account information of app 2, or query an account of app 1 that has been associated with the account of app 2, to implement login.

It should be understood that for S915, refer to an implementation process in the conventional technology. For brevity, details are not described herein again.

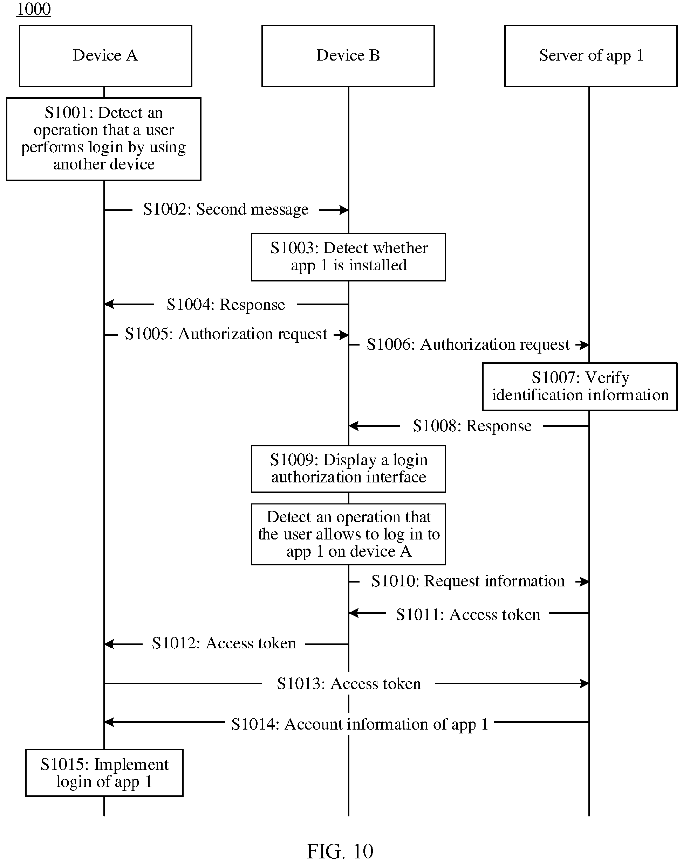

FIG. 10 is a schematic flowchart of a method 1000 for performing authorization by using another device according to an embodiment of this application. The method 1000 includes the following steps.

S1001: Device A detects, on a login interface or a registration interface of app 1, an operation that a user performs login or registration by using another device.

For example, as shown in FIG. 5(a), the mobile phone detects an operation that the user taps the control 502 for performing login by using another device.

S1002: In response to the operation, device A sends a second message, where the second message is used to query whether app 1 is installed on a surrounding device.

It should be understood that for a process in which device A sends the second message, refer to the process in which device A sends the first message in the foregoing method 900. For brevity, details are not described herein again.

S1003: When receiving the second message, device B may detect whether app 1 is installed on device B.

It should be understood that for a process in which device B detects whether app 1 is installed, refer to the foregoing process in which device B detects whether app 2 is installed. For brevity, details are not described herein again.

S1004: When determining that app 1 is installed, device B may send a response to device A, where the response indicates that app 1 is installed on device B.

It should be understood that, for a process in which device B sends the response to device A, refer to the description in the foregoing embodiment. For brevity, details are not described herein again.

S1005: Device A sends an authorization request (authorization request) to device B, where the authorization request is used to request app 1 on device B to perform login authorization for app 1 on device A.

In an embodiment, the authorization request may include identification information of app 1.

It should be understood that, for a process in which device A obtains the identification information of app 1, refer to the description in the foregoing embodiment. For brevity, details are not described herein again.

S1006: In response to receiving the authorization request, device B sends the authorization request to a server of app 1.

In an embodiment, device B sends the authorization request to an authorization server of app 1.

In this embodiment of this application, the authorization request sent by device B to the server of app 1 may be transmitted through a network transmission channel between device B and the server of app 1.

For example, after receiving the authorization request sent by device A, device B may send an HTTP request to the server of app 1 based on a URL address of the server of app 1, where the HTTP request may include the authorization request.

It should be understood that when the user installs app 1 on device B, device B may obtain the URL address of the server of app 1 from the server of app 1.

S1007: The server of app 1 verifies the identification information of app 1 in response to receiving the authorization request. After obtaining the authorization request sent by device A, the server of app 1 may verify, based on identification information that is of app 1 and that is stored by the server of app 1, the identification information of app 1 that is sent by device B.

S1008: In response to a fact that verification on the identification information of app 1 succeeds, the server of app 1 sends a response to device B.

In an embodiment, the response may indicate device B to prompt the user to determine whether to allow login authorization for app 1.

In an embodiment, the response may be an authorization code.

For example, in response to receiving the HTTP request, if the server of app 1 successfully verifies the identification information of app 1, the server of app 1 may send an HTTP response to device B, where the HTTP response may carry the response to the authorization request.

S1009: In response to receiving the response from the server of app 1, device B may display a login authorization interface.

For example, as shown in FIG. 5(c), in response to receiving the response from the server of app 1, the mobile phone may display "Authorize the notebook computer to log in" in a display interface of app 1.

S1010: In response to an operation that the user allows login authorization for app 1, device B sends request information to the server of app 1, where the request information is used to request an access token (access token).

In an embodiment, device B sends the request information to the authorization server of app 1. S1011: In response to obtaining the request information from device B, the server of app 1 sends the access token (access token) to device B.

It should be understood that signaling in both S1010 and S1011 may be transmitted through the network transmission channel between device B and the server of app 1.

It should be understood that, for a process in which device B sends the request information to the server of app 1, refer to the foregoing process in which device B sends the request information to the server of app 2, and for a process in which the server of app 1 sends the access token to device B, refer to the foregoing process in which the server of app 2 sends the access token to device B.

S1012: In response to receiving the access token from the server of app 1, device B sends the access token to device A.

It should be understood that, for a process in which device B sends the access token to device A, refer to the description in the foregoing embodiment.

S1013: In response to receiving the access token from device B, device A sends the access token to the server of app 1.

In an embodiment, device A sends the access token to a resource server of app 2.

In an embodiment, device A sends the access token and the identification information of app 1 to a resource server of app 2.

S1014: In response to receiving the access token from device A, the server of app 1 may send account information of app 1 to device A.

It should be understood that for a process in which device A sends the access token to the server of app 1, refer to the foregoing process in which device A sends the access token to the server of app 2, and for a process in which the server of app 1 sends the account information of app 1 to device A, refer to the foregoing process in which the server of app 2 sends the account information of app 2 to device A. For brevity, details are not described herein again.

S1015: In response to receiving the account information of app 1 from the server of app 1, device A implements login or registration for app 1.

For example, as shown in FIG. 5(d), after receiving the account information sent by the server of app 1, the notebook computer may implement login for app 1. A login account of app 1 on the notebook computer is the same as a login account of app 1 on the mobile phone.

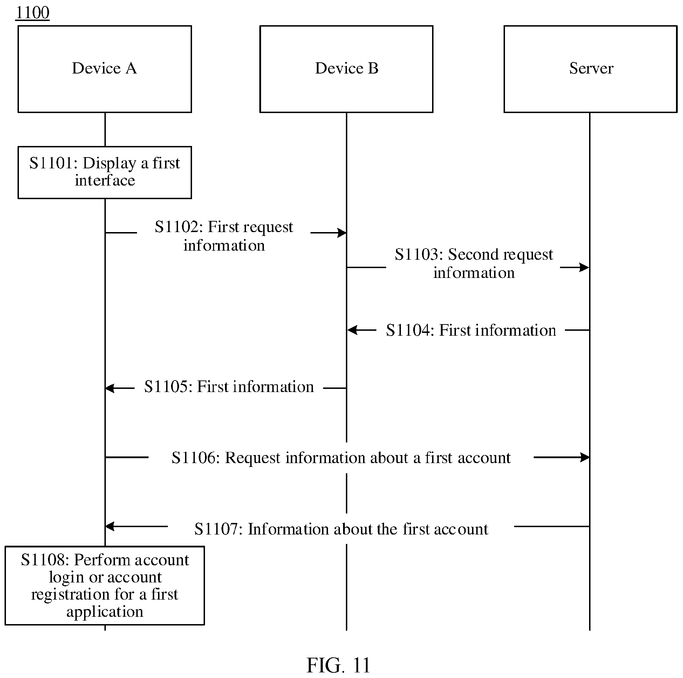

FIG. 11 is a schematic flowchart of a method 1100 for performing authorization by using another device according to an embodiment of this application. The method is applicable to a system including device A (for example, the notebook computer in the foregoing embodiment) and device B (for example, the mobile phone in the foregoing embodiment). The method 1100 includes the following steps.

S1101: Device A displays a first interface, where the first interface is an account login interface or an account registration interface of a first application.

For example, as shown in FIG. 3(a)-1 and FIG. 3(a)-2, the notebook computer may display an account login interface of app 1, where the login interface includes information about login by using a third-party account (for example, app 2, app 3, and app 4).

S1102: Device A sends first request information to device B in response to detecting an operation that a user performs account login or account registration for the first application by using a second application, where the first request information is used to request the second application on device B to perform authorization for the first application.

For example, as shown in FIG. 3(b)-1 and FIG. 3(b)-2, when the notebook computer detects an operation that a user taps to perform account login for app 1 by using app 2, the notebook computer may send the first request information to the mobile phone.

In an embodiment, the method further includes: Device A sends a query request before sending the first request information to device B, where the query request is used to request an electronic device that receives the query request to determine whether the second application is installed; and device A receives a first response sent by device B, where the first response indicates that the second application is installed on device B.

It should be understood that, for a process in which device A sends the query request to device B and device B determines whether the second application is installed, refer to the description in the foregoing embodiment. For brevity, details are not described herein again.

In an embodiment, the method further includes: Device A sends a query request before sending the first request information to device B, where the query request is used to request an electronic device that receives the query request to determine whether the second application is installed and logged in to; and device A receives a first response sent by device B, where the first response indicates that the second application is installed and logged in to on device B.

It should be understood that, for a process in which device B determines whether the second application is installed and logged in to, refer to the description in the foregoing embodiment. For brevity, details are not described herein again.

In an embodiment, the method 1100 further includes: Device A receives a second response sent by device C, where the second response indicates that the second application is installed on device C; device A prompts the user to select the second application on device B or device C to perform authorization for the first application; and device A sends the first request information to device B in response to an operation of selecting the second electronic device by the user.

For example, as shown in FIG. 4(b), after receiving responses sent by the mobile phone and the tablet computer, the notebook computer may display the prompt box 402, where the prompt box 402 includes prompt information "A plurality of surrounding devices installed with app 2 are detected. You can select". In response to detecting an operation that the user selects the mobile phone and taps the control 403, the notebook computer sends an authorization request to the mobile phone, where the authorization request is used to request app 2 on the mobile phone to perform login authorization for app 1.

S1103: Device B sends, based on the first request information, second request information to a server corresponding to the second application, where the second request information is used to request first information, the first information is to be used by device A to request information about a first account, and the first account is a login account of the second application on device B.

In an embodiment, the first information is an access token.

In an embodiment, that device B sends, based on the first request information, second request information to a server corresponding to the second application includes: Device B sends the first request information to the server in response to receiving the first request information; in response to receiving a third response sent by the server for the first request information, device B prompts the user whether to allow the first application to use the information about the first account; and device B sends the second request information to the server in response to an operation that the user allows the first application to use the information about the first account.

For example, as shown in FIG. 3(c), after the mobile phone receives the third response from the server, the mobile phone may prompt the user with "App 1 requests access to your account information". When the mobile phone detects an operation of tapping the control 304 by the user, the mobile phone may send the second request information to the notebook computer, where the second request information is used to request the access token.

In an embodiment, the third response may be an authorization code.

S1104: Device B receives the first information sent by the server.

It should be understood that, for a process of S1104, refer to the description in the embodiment shown in FIG. 7. For brevity, details are not described herein again.

S1105: Device B sends the first information to device A.

It should be understood that, for a process of S1105, refer to the description in the embodiment shown in FIG. 7. For brevity, details are not described herein again.

S1106: Device A requests the information about the first account from the server based on the first information.

It should be understood that, for a process of S1106, refer to the process of S812. For brevity, details are not described herein again.

S1107: Device A receives the information about the first account that is sent by the server.

S1108: Device A performs account login or account registration for the first application based on the information about the first account.

It should be understood that, for a process in which device A receives the information about the first account that is sent by the server and performs account login or account registration based on the information about the first account, refer to the description in S813.

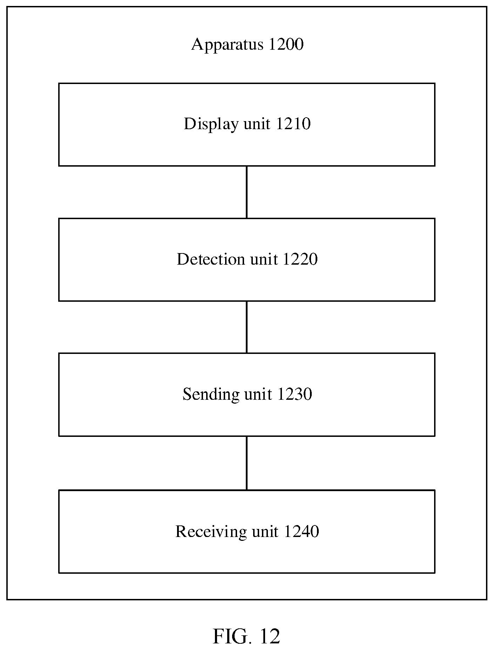

FIG. 12 is a schematic block diagram of an apparatus 1200 according to an embodiment of this application. The apparatus 1200 may be disposed in device A in FIG. 11. The apparatus 1200 includes: a display unit 1210, configured to display a first interface, where the first interface is an account login interface or an account registration interface of a first application; a detection unit 1220, configured to detect an operation that a user performs account login or account registration for the first application by using a second application; a sending unit 1230, configured to send first request information to a second electronic device in response to the operation, where the first request information is used to request the second application on the second electronic device to perform authorization for the first application; and a receiving unit 1240, configured to receive first information from the second electronic device, where the first information is to be used by the apparatus to request information about a first account, the first account is a login account of the second application on the second electronic device, and the first information is obtained by the second electronic device from a server. The sending unit 1230 is further configured to request the information about the first account from the server based on the first information. The receiving unit 1240 is configured to receive the information about the first account that is sent by the server, and perform account login or account registration for the first application based on the information about the first account.

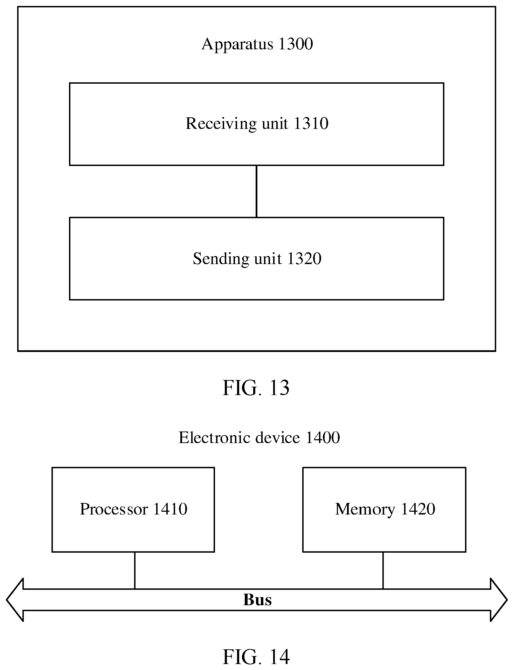

FIG. 13 is a schematic block diagram of an apparatus 1300 according to an embodiment of this application. The apparatus 1300 may be disposed in device B in FIG. 11. The apparatus 1300 includes: a receiving unit 1310, configured to receive first request information sent by a first electronic device, where the first request information is used to request a second application on the apparatus to perform authorization for a first application; and a sending unit 1320, configured to send, based on the first request information, second request information to a server corresponding to the second application, where the second request information is used to request first information, the first information is to be used by the first electronic device to request information about a first account, and the first account is a login account of the second application on the apparatus. The receiving unit 1310 is further configured to receive the first information sent by the server. The sending unit 1320 is further configured to send the first information to the first electronic device.

FIG. 14 is a schematic diagram of a structure of an electronic device 1400 according to an embodiment of this application. As shown in FIG. 14, the electronic device includes one or more processors 1410 and one or more memories 1420. The one or more memories 1420 store one or more computer programs, and the one or more computer programs include instructions. When the instructions are run by the one or more processors 1410, a first electronic device or a second electronic device is enabled to perform the technical solutions in the foregoing embodiments.

An embodiment of this application provides a system, including a first electronic device and a second electronic device. The system is configured to perform the technical solutions in the foregoing embodiments. Implementation principles and technical effects thereof are similar to those of the foregoing method embodiments. Details are not described herein again.

An embodiment of this application provides a computer program product. When the computer program product runs on a first electronic device (or the notebook computer in the foregoing embodiments), the first electronic device is enabled to perform the technical solutions in the foregoing embodiments. Implementation principles and technical effects thereof are similar to those of the foregoing method embodiments. Details are not described herein again.

An embodiment of this application provides a computer program product. When the computer program product runs on a second electronic device (or the mobile phone in the foregoing embodiments), the second electronic device is enabled to perform the technical solutions in the foregoing embodiments. Implementation principles and technical effects thereof are similar to those of the foregoing method embodiments. Details are not described herein again.

An embodiment of this application provides a readable storage medium. The readable storage medium includes instructions. When the instructions are run on a first electronic device (or the notebook computer in the foregoing embodiments), the first electronic device is enabled to perform the technical solutions in the foregoing embodiments. Implementation principles and technical effects thereof are similar, and details are not described herein again.

An embodiment of this application provides a readable storage medium. The readable storage medium includes instructions. When the instructions are run on a second electronic device (or the mobile phone in the foregoing embodiments), the second electronic device is enabled to perform the technical solutions in the foregoing embodiments. Implementation principles and technical effects thereof are similar, and details are not described herein again.

An embodiment of this application provides a chip. The chip is configured to execute instructions. When the chip runs, the technical solutions in the foregoing embodiments are performed. Implementation principles and technical effects thereof are similar, and details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this invention, whose is scope is defined by the appended claims.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners encompassed by the scope of the invention as defined by the appended claims.

In addition, function units in embodiments of this application may be integrated into one processing unit, or each unit may exist alone physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this invention as defined by the appended claims.

## Claims

1. A system, wherein the system comprises a first electronic device and a second electronic device, wherein
the first electronic device is configured to display (S1101) a first interface, wherein the first interface is an account login interface or an account registration interface of a first application;
the first electronic device is further configured to send (S1102) first request information to the second electronic device in response to detecting an operation that a user performs account login or account registration for the first application by using a second application, wherein the first request information is used to request the second application on the second electronic device to perform authorization for the first application;
the second electronic device is configured to send (S1103), based on the first request information, second request information to a server corresponding to the second application, wherein the second request information is used to request first information, the first information is to be used by the first electronic device to request information about a first account, and the first account is a login account of the second application on the second electronic device;
the second electronic device is further configured to receive (S1104) the first information sent by the server, and send (S1105) the first information to the first electronic device;
the first electronic device is further configured to request (S1106) the information about the first account from the server based on the first information; and
the first electronic device is further configured to receive (S1107) the information about the first account that is sent by the server, and perform account login or account registration for the first application based on the information about the first account;
**characterized in that**
the first electronic device is further configured to:
send a query request before sending the first request information to the second electronic device, wherein the query request is used to request an electronic device that receives the query request to determine whether the second application is installed; and
receive a first response sent by the second electronic device, wherein the first response indicates that the second application is installed on the second electronic device, wherein the first electronic device sends the first request information to the second electronic device in response to receiving the first response.

2. The system according to claim 1, wherein the first electronic device is further configured to:
receive a second response sent by a third electronic device, wherein the second response indicates that the second application is installed on the third electronic device;
prompt the user to select the second application on the second electronic device or the third electronic device to perform authorization for the first application; and
send the first request information to the second electronic device in response to an operation of selecting the second electronic device by the user.

3. The system according to any one of claims 1 or 2, wherein the second electronic device is further configured to:
before sending the second request information to the server, prompt the user whether to allow the first application to use the information about the first account; and
send the second request information to the server in response to an operation that the user allows the first application to use the information about the first account.

4. The system according to claim 3, wherein the second electronic device is specifically configured to:
send the first request information to the server in response to receiving the first request information;
in response to receiving a third response sent by the server for the first request information, prompt the user whether to allow the first application to use the information about the first account; and
send the second request information to the server in response to an operation that the user allows the first application to use the information about the first account.

5. The system according to any one of claims 1 to 4, wherein the first request information comprises identification information of the first application.

6. The system according to any one of claims 1 to 5, wherein the first electronic device is a device on which the second application is not installed.

7. A method for performing authorization by using another device, wherein the method is applied to a first electronic device, and the method comprises:
displaying (S1101), by the first electronic device, a first interface, wherein the first interface is an account login interface or an account registration interface of a first application;
sending (S1102), by the first electronic device, first request information to a second electronic device in response to detecting an operation that a user performs account login or account registration for the first application by using a second application, wherein the first request information is used to request the second application on the second electronic device to perform authorization for the first application;
receiving (S1105), by the first electronic device, first information from the second electronic device, wherein the first information is to be used by the first electronic device to request information about a first account, the first account is a login account of the second application on the second electronic device, and the first information is obtained by the second electronic device from a server;
requesting (S1106), by the first electronic device, the information about the first account from the server based on the first information; and
receiving (S1107), by the first electronic device, the information about the first account that is sent by the server, and performing account login or account registration for the first application based on the information about the first account;
**characterized in that**
before the sending first request information to a second electronic device, the method comprises:
sending a query request, wherein the query request is used to request an electronic device that receives the query request to determine whether the second application is installed; and
receiving a first response sent by the second electronic device, wherein the first response indicates that the second application is installed on the second electronic device, wherein the first electronic device sends the first request information to the second electronic device in response to receiving the first response.

8. The method according to claim 7, wherein before the sending first request information to a second electronic device, the method comprises:
receiving a second response sent by a third electronic device, wherein the second response indicates that the second application is installed on the third electronic device; and
prompting the user to select the second application on the second electronic device or the third electronic device to perform authorization for the first application; and
the sending first request information to a second electronic device comprises:
sending the first request information to the second electronic device in response to an operation of selecting the second electronic device by the user.

9. The method according to any one of claims 7 or 8, wherein the first request information comprises identification information of the first application.

10. The method according to any one of claims 7 to 9, wherein the first electronic device is a device on which the second application is not installed.

11. A method for performing authorization by using another device, wherein the method is applied to a second electronic device, and the method comprises:
receiving (S1102), by the second electronic device, first request information sent by a first electronic device, wherein the first request information is used to request a second application on the second electronic device to perform authorization for a first application;
sending (S1103), by the second electronic device based on the first request information, second request information to a server corresponding to the second application, wherein the second request information is used to request first information, the first information is to be used by the first electronic device to request information about a first account, and the first account is a login account of the second application on the second electronic device;
receiving (S1104), by the second electronic device, the first information sent by the server; and
sending (S1105), by the second electronic device, the first information to the first electronic device;
**characterized by**
before the receiving the first request information sent by a first electronic device, the method comprises:
receiving a query request, wherein the query request is used to request an electronic device that receives the query request to determine whether the second application is installed; and
sending a first response sent to the first electronic device, wherein the first response indicates that the second application is installed on the second electronic device, wherein the second electronic device receives the first request information sent by the first electronic device in response to the first response.

12. An electronic device (100), comprising:
one or more processors (110); and
one or more memories (121), wherein
the one or more memories (121) store one or more computer programs, the one or more computer programs comprise instructions, and when the instructions are executed by the one or more processors (110), the electronic device (100) is configured to perform the method according to any one of claims 7 to 10.

13. An electronic device (100), comprising:
one or more processors (110); and
one or more memories (121), wherein
the one or more memories store one or more computer programs, the one or more computer programs comprise instructions, and when the instructions are executed by the one or more processors (110), the electronic device (100) is configured to perform the method according to claim 11.

14. A computer program product including instructions, wherein when the computer program product runs on a first electronic device, the electronic device is enabled to perform the method according to any one of claims 7 to 10; or when the computer program product runs on a second electronic device, the electronic device is configured to perform the method according to claim 11.

15. A computer-readable storage medium is provided, including instructions, wherein when the instructions are run on a first electronic device, the electronic device is configured to perform the method according to any one of claims 7 to 10; or when the instructions are run on a second electronic device, the electronic device is configured to perform the method according to claim 11.

## Patentansprüche

1. System, wobei das System eine erste elektronische Vorrichtung und eine zweite elektronische Vorrichtung umfasst, wobei
die erste elektronische Vorrichtung dazu konfiguriert ist, eine erste Schnittstelle anzuzeigen (S1101), wobei die erste Schnittstelle eine Kontoanmeldeschnittstelle oder eine Kontoregistrierungsschnittstelle einer ersten Anwendung ist;
die erste elektronische Vorrichtung ferner dazu konfiguriert ist, als Antwort auf Detektieren eines Vorgangs, bei dem ein Benutzer eine Kontoanmeldung oder Kontoregistrierung für die erste Anwendung unter Verwendung einer zweiten Anwendung durchführt, erste Anforderungsinformationen an die zweite elektronische Vorrichtung zu senden (S1102), wobei die ersten Anforderungsinformationen verwendet werden, um die zweite Anwendung auf der zweiten elektronischen Vorrichtung aufzufordern, eine Autorisierung für die erste Anwendung durchzuführen;
die zweite elektronische Vorrichtung dazu konfiguriert ist, basierend auf den ersten Anforderungsinformationen zweite Anforderungsinformationen an einen Server, welcher der zweiten Anwendung entspricht, zu senden (S1103), wobei die zweiten Anforderungsinformationen verwendet werden, um erste Informationen anzufordern, die ersten Informationen von der ersten elektronischen Vorrichtung zu verwenden sind, um Informationen über ein erstes Konto anzufordern, und das erste Konto ein Anmeldekonto der zweiten Anwendung auf der zweiten elektronischen Vorrichtung ist;
die zweite elektronische Vorrichtung ferner dazu konfiguriert ist, die ersten Informationen, die von dem Server gesendet werden, zu empfangen (S1104) und die ersten Informationen an die erste elektronische Vorrichtung zu senden (S1105);
die erste elektronische Vorrichtung ferner dazu konfiguriert ist, die Informationen über das erste Konto basierend auf den ersten Informationen von dem Server anzufordern (S1106); und
die erste elektronische Vorrichtung ferner dazu konfiguriert ist, die Informationen über das erste Konto, die von dem Server gesendet werden, zu empfangen (S1107) und basierend auf den Informationen über das erste Konto eine Kontoanmeldung oder eine Kontoregistrierung für die erste Anwendung durchzuführen;
**dadurch gekennzeichnet, dass**
die erste elektronische Vorrichtung ferner zu Folgendem konfiguriert ist:
Senden einer Abfrageanforderung vor dem Senden der ersten Anforderungsinformationen an die zweite elektronische Vorrichtung, wobei die Abfrageanforderung verwendet wird, um eine elektronische Vorrichtung, welche die Abfrageanforderung empfängt, aufzufordern, zu bestimmen, ob die zweite Anwendung installiert ist; und
Empfangen einer ersten Antwort, die von der zweiten elektronischen Vorrichtung gesendet wird, wobei die erste Antwort anzeigt, dass die zweite Anwendung auf der zweiten elektronischen Vorrichtung installiert ist, wobei die erste elektronische Vorrichtung die ersten Anforderungsinformationen als Antwort auf Empfangen der ersten Antwort an die zweite elektronische Vorrichtung sendet.

2. System nach Anspruch 1, wobei die erste elektronische Vorrichtung ferner zu Folgendem konfiguriert ist:
Empfangen einer zweiten Antwort, die von einer dritten elektronischen Vorrichtung gesendet wird, wobei die zweite Antwort anzeigt, dass die zweite Anwendung auf der dritten elektronischen Vorrichtung installiert ist;
Auffordern des Benutzers, die zweite Anwendung auf der zweiten elektronischen Vorrichtung oder der dritten elektronischen Vorrichtung auszuwählen, um eine Autorisierung für die erste Anwendung durchzuführen; und
Senden der ersten Anforderungsinformationen an die zweite elektronische Vorrichtung als Antwort auf einen Vorgang des Auswählens der zweiten elektronischen Vorrichtung durch den Benutzer.

3. System nach einem der Ansprüche 1 oder 2, wobei die zweite elektronische Vorrichtung ferner zu Folgendem konfiguriert ist:
vor dem Senden der zweiten Anforderungsinformationen an den Server, Auffordern des Benutzers, ob der ersten Anwendung zu erlauben ist, die Informationen über das erste Konto zu verwenden; und
Senden der zweiten Anforderungsinformationen an den Server als Antwort auf einen Vorgang, bei dem der Benutzer der ersten Anwendung erlaubt, die Informationen über das erste Konto zu verwenden.

4. System nach Anspruch 3, wobei die zweite elektronische Vorrichtung insbesondere zu Folgendem konfiguriert ist:
Senden der ersten Anforderungsinformationen an den Server als Antwort auf Empfangen der ersten Anforderungsinformationen;
als Antwort auf Empfangen einer dritten Antwort, die von dem Server für die ersten Anforderungsinformationen gesendet werden, Auffordern des Benutzers, ob der ersten Anwendung zu erlauben ist, die Informationen über das erste Konto zu verwenden; und
Senden der zweiten Anforderungsinformationen an den Server als Antwort auf einen Vorgang, bei dem der Benutzer der ersten Anwendung erlaubt, die Informationen über das erste Konto zu verwenden.

5. System nach einem der Ansprüche 1 bis 4, wobei die ersten Anforderungsinformationen Identifikationsinformationen der ersten Anwendung umfassen.

6. System nach einem der Ansprüche 1 bis 5, wobei die erste elektronische Vorrichtung eine Vorrichtung ist, auf der die zweite Anwendung nicht installiert ist.

7. Verfahren zum Durchführen einer Autorisierung unter Verwendung einer anderen Vorrichtung, wobei das Verfahren auf eine erste elektronische Vorrichtung angewendet wird und das Verfahren Folgendes umfasst:
Anzeigen (S1101), durch die erste elektronische Vorrichtung, einer ersten Schnittstelle, wobei die erste Schnittstelle eine Kontoanmeldeschnittstelle oder eine Kontoregistrierungsschnittstelle einer ersten Anwendung ist;
Senden (S1102), durch die erste elektronische Vorrichtung, erster Anforderungsinformationen an eine zweite elektronische Vorrichtung als Antwort auf Detektieren eines Vorgangs, bei dem ein Benutzer eine Kontoanmeldung oder Kontoregistrierung für die erste Anwendung unter Verwendung einer zweiten Anwendung durchführt, wobei die ersten Anforderungsinformationen verwendet werden, um die zweite Anwendung auf dem zweiten elektronischen Vorrichtung aufzufordern, eine Autorisierung für die erste Anwendung durchzuführen;
Empfangen (S1105), durch die erste elektronische Vorrichtung, erster Informationen von der zweiten elektronischen Vorrichtung, wobei die ersten Informationen durch die erste elektronische Vorrichtung zu verwenden sind, um Informationen über ein erstes Konto anzufordern, das erste Konto ein Anmeldekonto der zweiten Anwendung auf der zweiten elektronischen Vorrichtung ist und die ersten Informationen durch die zweite elektronische Vorrichtung von einem Server erlangt werden;
Anfordern (S1106), durch die erste elektronische Vorrichtung, der Informationen über das erste Konto von dem Server basierend auf den ersten Informationen; und
Empfangen (S1107), durch die erste elektronische Vorrichtung, der Informationen über das erste Konto, die von dem Server gesendet werden, und Durchführen einer Kontoanmeldung oder einer Kontoregistrierung für die erste Anwendung basierend auf den Informationen über das erste Konto;
**dadurch gekennzeichnet, dass**
das Verfahren vor dem Senden erster Anforderungsinformationen an eine zweite elektronische Vorrichtung Folgendes umfasst:
Senden einer Abfrageanforderung, wobei die Abfrageanforderung verwendet wird, um eine elektronische Vorrichtung, welche die Abfrageanforderung empfängt, aufzufordern, zu bestimmen, ob die zweite Anwendung installiert ist; und
Empfangen einer ersten Antwort, die von der zweiten elektronischen Vorrichtung gesendet wird, wobei die erste Antwort anzeigt, dass die zweite Anwendung auf der zweiten elektronischen Vorrichtung installiert ist, wobei die erste elektronische Vorrichtung die ersten Anforderungsinformationen als Antwort auf Empfangen der ersten Antwort an die zweite elektronische Vorrichtung sendet.

8. Verfahren nach Anspruch 7, wobei das Verfahren vor dem Senden erster Anforderungsinformationen an eine zweite elektronische Vorrichtung Folgendes umfasst:
Empfangen einer zweiten Antwort, die von einer dritten elektronischen Vorrichtung gesendet wird, wobei die zweite Antwort anzeigt, dass die zweite Anwendung auf der dritten elektronischen Vorrichtung installiert ist; und
Auffordern des Benutzers, die zweite Anwendung auf der zweiten elektronischen Vorrichtung oder der dritten elektronischen Vorrichtung auszuwählen, um eine Autorisierung für die erste Anwendung durchzuführen; und
das Senden erster Anforderungsinformationen an eine zweite elektronische Vorrichtung Folgendes umfasst:
Senden der ersten Anforderungsinformationen an die zweite elektronische Vorrichtung als Antwort auf einen Vorgang des Auswählens der zweiten elektronischen Vorrichtung durch den Benutzer.

9. Verfahren nach einem der Ansprüche 7 oder 8, wobei die ersten Anforderungsinformationen Identifikationsinformationen der ersten Anwendung umfassen.

10. Verfahren nach einem der Ansprüche 7 bis 9, wobei die erste elektronische Vorrichtung eine Vorrichtung ist, auf der die zweite Anwendung nicht installiert ist.

11. Verfahren zum Durchführen einer Autorisierung unter Verwendung einer anderen Vorrichtung, wobei das Verfahren auf eine zweite elektronische Vorrichtung angewendet wird und das Verfahren Folgendes umfasst:
Empfangen (S1102), durch die zweite elektronische Vorrichtung, erster Anforderungsinformationen, die von einer ersten elektronischen Vorrichtung gesendet werden, wobei die ersten Anforderungsinformationen verwendet werden, um eine zweite Anwendung auf der zweiten elektronischen Vorrichtung aufzufordern, eine Autorisierung für eine erste Anwendung durchzuführen;
Senden (S1103), durch die zweite elektronische Vorrichtung, zweiter Anforderungsinformationen an einen Server, welcher der zweiten Anwendung entspricht, basierend auf den ersten Anforderungsinformationen, wobei die zweiten Anforderungsinformationen zum Anfordern erster Informationen verwendet werden, die ersten Informationen von der ersten elektronischen Vorrichtung zum Anfordern von Informationen über ein erstes Konto zu verwenden sind und das erste Konto ein Anmeldekonto der zweiten Anwendung auf der zweiten elektronischen Vorrichtung ist;
Empfangen (S1104), durch die zweite elektronische Vorrichtung, erster Informationen, die von dem Server gesendet werden; und
Senden (S1105), durch die zweite elektronische Vorrichtung, erster Informationen an die erste elektronische Vorrichtung;
**dadurch gekennzeichnet, dass**
das Verfahren vor dem Empfangen der ersten Anforderungsinformationen, die von einer ersten elektronischen Vorrichtung gesendet werden, Folgendes umfasst:
Empfangen einer Abfrageanforderung, wobei die Abfrageanforderung verwendet wird, um eine elektronische Vorrichtung, welche die Abfrageanforderung empfängt, aufzufordern, zu bestimmen, ob die zweite Anwendung installiert ist; und
Senden einer ersten Antwort, die an die erste elektronische Vorrichtung gesendet wird, wobei die erste Antwort anzeigt, dass die zweite Anwendung auf der zweiten elektronischen Vorrichtung installiert ist, wobei die zweite elektronische Vorrichtung die ersten Anforderungsinformationen, die durch die erste elektronische Vorrichtung gesendet werden, als Antwort auf die erste Antwort empfängt.

12. Elektronische Vorrichtung (100), umfassend:
einen oder mehrere Prozessoren (110); und
einen oder mehrere Speicher (121), wobei
der eine oder die mehreren Speicher (121) ein oder mehrere Computerprogramme speichern, das eine oder die mehreren Computerprogramme Anweisungen umfassen und, wenn die Anweisungen durch den einen oder die mehreren Prozessoren (110) ausgeführt werden, die elektronische Vorrichtung (100) dazu konfiguriert ist, das Verfahren nach einem der Ansprüche 7 bis 10 durchzuführen.

13. Elektronische Vorrichtung (100), umfassend:
einen oder mehrere Prozessoren (110); und
einen oder mehrere Speicher (121), wobei
der eine oder die mehreren Speicher ein oder mehrere Computerprogramme speichern, das eine oder die mehreren Computerprogramme Anweisungen umfassen und, wenn die Anweisungen durch den einen oder die mehreren Prozessoren (110) ausgeführt werden, die elektronische Vorrichtung (100) dazu konfiguriert ist, das Verfahren nach Anspruch 11 durchzuführen.

14. Computerprogrammprodukt, das Anweisungen beinhaltet, wobei, wenn das Computerprogrammprodukt auf einer ersten elektronischen Vorrichtung läuft, die elektronische Vorrichtung in die Lage versetzt wird, das Verfahren nach einem der Ansprüche 7 bis 10 durchzuführen; oder, wenn das Computerprogrammprodukt auf einer zweiten elektronischen Vorrichtung läuft, die elektronische Vorrichtung dazu konfiguriert ist,
das Verfahren nach Anspruch 11 durchzuführen.

15. Computerlesbares Speichermedium, das Anweisungen beinhaltet, wobei, wenn die Anweisungen auf einer ersten elektronischen Vorrichtung laufen, die elektronische Vorrichtung dazu konfiguriert ist, das Verfahren nach einem der Ansprüche 7 bis 10 durchzuführen; oder, wenn die Anweisungen auf einer zweiten elektronischen Vorrichtung laufen, die elektronische Vorrichtung dazu konfiguriert ist, das Verfahren nach Anspruch 11 durchzuführen.

## Revendications

1. Système, dans lequel le système comprend un premier dispositif électronique et un deuxième dispositif électronique, dans lequel
le premier dispositif électronique est configuré pour afficher (S1101) une première interface, dans lequel la première interface est une interface de connexion de compte ou une interface d'enregistrement de compte d'une première application ;
le premier dispositif électronique est également configuré pour envoyer (S1102) des premières informations de demande au deuxième dispositif électronique en réponse à la détection d'une opération selon laquelle un utilisateur réalise une connexion de compte ou un enregistrement de compte pour la première application à l'aide d'une seconde application, dans lequel les premières informations de demande sont utilisées pour demander à la seconde application sur le deuxième dispositif électronique de réaliser une autorisation pour la première application ;
le deuxième dispositif électronique est configuré pour envoyer (S1103), sur la base des premières informations de demande, des secondes informations de demande à un serveur correspondant à la seconde application, dans lequel les secondes informations de demande sont utilisées pour demander des premières informations, les premières informations doivent être utilisées par le premier dispositif électronique pour demander des informations relatives à un premier compte, et le premier compte est un compte de connexion de la seconde application sur le deuxième dispositif électronique ;
le deuxième dispositif électronique est également configuré pour recevoir (S1104) les premières informations envoyées par le serveur, et envoyer (S1105) les premières informations au premier dispositif électronique ;
le premier dispositif électronique est également configuré pour demander (S1106) les informations relatives au premier compte au serveur sur la base des premières informations ; et
le premier dispositif électronique est également configuré pour recevoir (S1107) les informations relatives au premier compte qui sont envoyées par le serveur, et réaliser une connexion de compte ou un enregistrement de compte pour la première application sur la base des informations relatives au premier compte ;
**caractérisé en ce que**
le premier dispositif électronique est également configuré pour :
envoyer une demande de requête avant d'envoyer les premières informations de demande au deuxième dispositif électronique, dans lequel la demande de requête est utilisée pour demander à un dispositif électronique qui reçoit la demande de requête de déterminer si la seconde application est installée ; et
recevoir une première réponse envoyée par le deuxième dispositif électronique, dans lequel la première réponse indique que la seconde application est installée sur le deuxième dispositif électronique, dans lequel le premier dispositif électronique envoie les premières informations de demande au deuxième dispositif électronique en réponse à la réception de la première réponse.

2. Système selon la revendication 1, dans lequel le premier dispositif électronique est également configuré pour :
recevoir une deuxième réponse envoyée par un troisième dispositif électronique, dans lequel la deuxième réponse indique que la seconde application est installée sur le troisième dispositif électronique ;
inviter l'utilisateur à sélectionner la seconde application sur le deuxième dispositif électronique ou le troisième dispositif électronique pour réaliser une autorisation pour la première application ; et
envoyer les premières informations de demande au deuxième dispositif électronique en réponse à une opération de sélection du deuxième dispositif électronique par l'utilisateur.

3. Système selon l'une quelconque des revendications 1 ou 2, dans lequel le deuxième dispositif électronique est également configuré pour :
avant d'envoyer les secondes informations de demande au serveur, inviter l'utilisateur à indiquer s'il autorise la première application à utiliser les informations relatives au premier compte ; et
envoyer les secondes informations de demande au serveur en réponse à une opération selon laquelle l'utilisateur autorise la première application à utiliser les informations relatives au premier compte.

4. Système selon la revendication 3, dans lequel le deuxième dispositif électronique est spécifiquement configuré pour :
envoyer les premières informations de demande au serveur en réponse à la réception des premières informations de demande ;
en réponse à la réception d'une troisième réponse envoyée par le serveur pour les premières informations de demande, inviter l'utilisateur à indiquer s'il autorise la première application à utiliser les informations relatives au premier compte ; et
envoyer les secondes informations de demande au serveur en réponse à une opération selon laquelle l'utilisateur autorise la première application à utiliser les informations relatives au premier compte.

5. Système selon l'une quelconque des revendications 1 à 4, dans lequel les premières informations de demande comprennent des informations d'identification de la première application.

6. Système selon l'une quelconque des revendications 1 à 5, dans lequel le premier dispositif électronique est un dispositif sur lequel la seconde application n'est pas installée.

7. Procédé de réalisation d'une autorisation à l'aide d'un autre dispositif, dans lequel le procédé est appliqué à un premier dispositif électronique, et le procédé comprend :
l'affichage (S1101), par le premier dispositif électronique, d'une première interface, dans lequel la première interface est une interface de connexion de compte ou une interface d'enregistrement de compte d'une première application ;
l'envoi (S1102), par le premier dispositif électronique, de premières informations de demande au deuxième dispositif électronique en réponse à la détection d'une opération selon laquelle un utilisateur réalise une connexion de compte ou un enregistrement de compte pour la première application à l'aide d'une seconde application, dans lequel les premières informations de demande sont utilisées pour demander à la seconde application sur le deuxième dispositif électronique de réaliser une autorisation pour la première application ;
la réception (S1105), par le premier dispositif électronique, de premières informations provenant du deuxième dispositif électronique, dans lequel les premières informations doivent être utilisées par le premier dispositif électronique pour demander des informations relatives à un premier compte, le premier compte est un compte de connexion de la seconde application sur le deuxième dispositif électronique, et les premières informations sont obtenues par le deuxième dispositif électronique à partir d'un serveur ;
la demande (S1106), par le premier dispositif électronique, des informations relatives au premier compte au serveur sur la base des premières informations ; et
la réception (S1107), par le premier dispositif électronique, des informations relatives au premier compte qui sont envoyées par le serveur, et la réalisation d'une connexion de compte ou d'un enregistrement de compte pour la première application sur la base des informations relatives au premier compte ;
**caractérisé en ce que**
avant d'envoyer les premières informations de demande à un deuxième dispositif électronique, le procédé comprend :
l'envoi d'une demande de requête, dans lequel la demande de requête est utilisée pour demander à un dispositif électronique qui reçoit la demande de requête de déterminer si la seconde application est installée ; et
la réception d'une première réponse envoyée par le deuxième dispositif électronique, dans lequel la première réponse indique que la seconde application est installée sur le deuxième dispositif électronique, dans lequel le premier dispositif électronique envoie les premières informations de demande au deuxième dispositif électronique en réponse à la réception de la première réponse.

8. Procédé selon la revendication 7, dans lequel, avant d'envoyer les premières informations de demande à un deuxième dispositif électronique, le procédé comprend :
la réception d'une deuxième réponse envoyée par un troisième dispositif électronique, dans lequel la deuxième réponse indique que la seconde application est installée sur le troisième dispositif électronique ; et
l'invite de l'utilisateur à sélectionner la seconde application sur le deuxième dispositif électronique ou le troisième dispositif électronique pour réaliser une autorisation pour la première application ; et
l'envoi des premières informations de demande à un deuxième dispositif électronique comprend :
l'envoi des premières informations de demande au deuxième dispositif électronique en réponse à une opération de sélection du deuxième dispositif électronique par l'utilisateur.

9. Procédé selon l'une quelconque des revendications 7 ou 8, dans lequel les premières informations de demande comprennent des informations d'identification de la première application.

10. Procédé selon l'une quelconque des revendications 7 à 9, dans lequel le premier dispositif électronique est un dispositif sur lequel la seconde application n'est pas installée.

11. Procédé de réalisation d'une autorisation à l'aide d'un autre dispositif, dans lequel le procédé est appliqué à un deuxième dispositif électronique, et le procédé comprend :
la réception (S1102), par le deuxième dispositif électronique, de premières informations de demande envoyées par un premier dispositif électronique, dans lequel les premières informations de demande sont utilisées pour demander à une seconde application sur le deuxième dispositif électronique de réaliser une autorisation pour une première application ;
l'envoi (S1103), par le deuxième dispositif électronique sur la base des premières informations de demande, de secondes informations de demande à un serveur correspondant à la seconde application, dans lequel les secondes informations de demande sont utilisées pour demander des premières informations, les premières informations doivent être utilisées par le premier dispositif électronique pour demander des informations relatives à un premier compte, et le premier compte est un compte de connexion de la seconde application sur le deuxième dispositif électronique ;
la réception (S1104), par le deuxième dispositif électronique, des premières informations envoyées par le serveur ; et
l'envoi (S1105), par le deuxième dispositif électronique, des premières informations au premier dispositif électronique ;
**caractérisé par**
avant la réception des premières informations de demande envoyées par un premier dispositif électronique, le procédé comprend :
la réception d'une demande de requête, dans lequel la demande de requête est utilisée pour demander à un dispositif électronique qui reçoit la demande de requête de déterminer si la seconde application est installée ; et
l'envoi d'une première réponse envoyée au premier dispositif électronique, dans lequel la première réponse indique que la seconde application est installée sur le deuxième dispositif électronique, dans lequel le deuxième dispositif électronique reçoit les premières informations de demande envoyées par le premier dispositif électronique en réponse à la première réponse.

12. Dispositif électronique (100), comprenant :
un ou plusieurs processeurs (110) ; et
une ou plusieurs mémoires (121), dans lequel
les une ou plusieurs mémoires (121) stockent un ou plusieurs programmes informatiques, les un ou plusieurs programmes informatiques comprennent des instructions, et lorsque les instructions sont exécutées par les un ou plusieurs processeurs (110), le dispositif électronique (100) est configuré pour réaliser le procédé selon l'une quelconque des revendications 7 à 10.

13. Dispositif électronique (100), comprenant :
un ou plusieurs processeurs (110) ; et
une ou plusieurs mémoires (121), dans lequel
les une ou plusieurs mémoires stockent un ou plusieurs programmes informatiques, les un ou plusieurs programmes informatiques comprennent des instructions, et lorsque les instructions sont exécutées par les un ou plusieurs processeurs (110), le dispositif électronique (100) est configuré pour réaliser le procédé selon la revendication 11.

14. Produit de programme informatique comportant des instructions, dans lequel, lorsque le produit de programme informatique s'exécute sur un premier dispositif électronique, le dispositif électronique est activé pour réaliser le procédé selon l'une quelconque des revendications 7 à 10 ; ou lorsque le produit de programme informatique s'exécute sur un deuxième dispositif électronique, le dispositif électronique est configuré pour réaliser le procédé selon la revendication 11.

15. Support de stockage lisible par ordinateur est fourni, comportant des instructions, dans lequel lorsque les instructions sont exécutées sur un premier dispositif électronique, le dispositif électronique est configuré pour réaliser le procédé selon l'une quelconque des revendications 7 à 10 ; ou lorsque les instructions sont exécutées sur un deuxième dispositif électronique, le dispositif électronique est configuré pour réaliser le procédé selon la revendication 11.
